# EUROPEAN PATENT APPLICATION

(11) **EP 1 770 920 A1**
(43) Date of publication of application: **04.04.2007**
(21) Application number: 05748668.0
(22) Date of filing: 08.06.2005
(51) Int. Cl.: H04L 12/56, H04L 12/44, H04L 13/08

(54) **CONNECTION MODE CONTROL DEVICE, CONNECTION MODE CONTROL METHOD, AND CONNECTION MODE CONTROL PROGRAM**

(30) Priority: 16.07.2004 JP 2004210595; 29.09.2004 JP 2004284563
(71) Applicant: Brother Kogyo Kabushiki Kaisha, Nagoya-shi, Aichi-ken 467-0841 (JP); Xing Inc., Nagoya-shi, Aichi 4670851 (JP)
(72) Inventor: HIBINO, Yoshihiko, Brother Kogyo Kabushiki Kaisha, Nagoya-shi, Aichi 4678561 (JP); KIYOHARA, Yuji, Brother Kogyo Kabushiki Kaisha, Nagoya-shi, Aichi 4678561 (JP); SUZUKI, Hiroaki, Brother Kogyo Kabushiki Kaisha, Nagoya-shi, Aichi 4678561 (JP); USHIYAMA, Kentaro, Brother Kogyo Kabushiki Kaisha, Nagoya-shi, Aichi 4678561 (JP); IIJIMA, Koichi, Nagoya-shi, Aichi 4670851 (JP)
(74) Representative: Kuhnen & Wacker
(86) International application number: PCT/JP2005/010518
(87) International publication number: WO 2006/008885

(57) **Abstract**

There is provided a network control device capable of surely distributing a content even when a relay function of one of the nodes contained in a network stops, without affecting the process in nodes below the node and while improving the re-liability of the network system itself.

When controlling a node N contained in a network system NS including a server Sand a plurality of nodes N constituting a plurality of hierarchies and connected to one another, wherein a content is distributed from the server S to the respective nodes N, it is checked whether a content relay function in a node located at the uplink with respect to the node N in the content distribution has stopped. When the stop of the relay function is detected, control is performed so that the consumption speed of the content accumulated in the lower node N in the process executed in the node N is smaller than the consumption speed before the relay function has stopped.

## Description

### Technical Field

The present invention relates to a technical field of a network controlling apparatus, a connection mode controlling apparatus, a network controlling method, a connection mode controlling method, a network controlling program, and a connection mode controlling program. More specifically, the invention relates to a technical field of a network controlling apparatus, a connection mode controlling apparatus, a network controlling method, a connection mode controlling method, a network controlling program, and a connection mode controlling program for controlling a distribution mode of distributing distribution information distributed from a distribution source in a network system while stepwisely relaying the distribution information in a relay unit which is connected while constructing a hierarchy of a plurality of levels.

### Background Art

In recent years, as the speed of the Internet lines for houses increases, a network system is being commonly used. In the network system, a network is constructed by connecting personal computers and the like in houses in a tree structure whose apex is a single distributing apparatus as a distribution source, and so-called contents such as music and movies is distributed as distribution information from the distributing apparatus via the network. The network is called "topology" from the viewpoint of the connection mode. Each of the distributing apparatus and the personal computers constructing the network is generally called a "node".

For example, Patent Document 1 discloses a conventional technique of the network system.
Patent Document 1: Japanese Patent Laid-Open No. 2003-169089

In each of nodes included in a conventional network system typified by the network system of Japanese Patent Laid-Open No. 2003-169089, contents transferred from a upper-order node is temporarily stored in a buffer memory and provided for a reproducing process and the like. The configuration is intended to reduce the influence of fluctuations in transfer speed in the Internet circuit constructing a distribution path in the network system. As the buffer memory, for example, an FIFO (First In First Out) memory such as a ring buffer memory is used.

On the other hand, in the network system, the nodes constructing the system are personal computers and the like in houses as described above. Consequently, there may be a case such that the power of any of the nodes on the distribution path is turned off irrespective of whether contents is being distributed or not. In such a case, the function of relaying the contents to lower-order nodes connected to the node whose power switch is turned off stops.

In the case where the relaying function stops in any of the nodes on the distribution path during distribution of contents in the network system, the topology is reconstructed so as to include the nodes other than the node in which the relay function stops (that is, the distribution path from the distributing apparatus to the lower-order nodes directly connected to the node whose relay function stops is reconstructed and distribution is restarted).

### Disclosure of the Invention

### Problems to be solved by the Invention

In the reconfiguration of the topology in the conventional network system, however, processes such as search for the shortest path from the distributing apparatus and connection switch using the search result are necessary. As a result, distribution of contents to the lower-order nodes is temporarily interrupted. In the case where the distribution is interrupted, in the lower-order nodes, process of reproducing contents stored in the buffer memory (in other words, consumption of data as contents stored in the buffer memory) continues but new contents to the buffer is not supplied. Consequently, a problem occurs such that the storage amount in the buffer gradually decreases and, in some cases, the contents reproducing process in the lower-order nodes is interrupted.

The interruption of the reproducing process results in deterioration in the reliability of the network system itself in the case where the relay function stops in any of the nodes included in the network system.

The present invention has been achieved in view of the problems and an object of the invention is to provide a network controlling apparatus, a network controlling method, and a network controlling program for controlling a distribution mode in a network system so that, even in the case the relay function of any of nodes included in the network system stops, contents can be distributed with reliability while improving the reliability of the network system itself without influencing processes in lower-order nodes.

### Means for solving the Problems

To achieve the object, an invention according to claim 1 relates to a network controlling apparatus for controlling any of a plurality of relays included in a network system including a distributor as a distribution source of distribution information and a plurality of relays connected to the distributor while forming a plurality of hierarchical levels, and in which the distribution information is distributed from the distributor to the relays, the apparatus comprising: detecting means such as a CPU for detecting whether function of relaying the distribution information in any of the relays on the upstream in distribution of the distribution information of a target relay as the relay to be controlled stops or not; and a consumption amount control means such as a CPU for controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

Therefore, when the relay function in a relay on the upstream side in the network system stops, the consumption amount per unit time of the distribution information stored in the relay on the downstream side is controlled to be smaller than that before the stop. Consequently, process interruption or occurrence of an extreme process delay in the downstream relay caused by the situation such that the distribution of the distribution information is interrupted but the distribution information is consumed at a similar speed as that before the interruption can be prevented without applying a burden on the network system itself.

To achieve the object, an invention according to claim 2 relates to the network controlling apparatus according to claim 1, wherein the distribution information is image information, and the consumption amount control means decreases the unit time consumption amount by making a speed of reducing a storage amount of the image information in buffer means for temporarily storing the image information in the target relay by using the image information for the process slower than the reducing speed before the relay function stops.

Therefore, in addition to the effect of the invention according to claim 1, the distribution information is image information, and the unit time consumption amount is reduced by making a speed of reducing a storage amount of the image information in buffer means slower than the reducing speed before the relay function stops. Thus, a unit time consumption amount can be reduced with a simple configuration without performing complicated speed control process.

To achieve the object, an invention according to claim 3 relates to the network controlling apparatus according to claim 2, wherein the image information is moving picture information made by a plurality of still pictures, and the consumption amount control means decreases the speed of reducing the storage amount by repeatedly outputting the same still picture a plurality of times from the buffer means.

Therefore, in addition to the effect of the invention according to claim 2, the speed of reducing the storage amount is slowed by repeatedly outputting the same still picture as a component of moving picture information a plurality of times. Thus, the unit time consumption amount can be reduced reliably by simple process.

To achieve the object, an invention according to claim 4 relates to the network controlling apparatus according to claim 1, wherein the distribution information is coded image information, and the consumption amount control means reduces the unit time consumption amount by making a speed of decoding the image information in the process in the target relay slower than the decoding speed before the relay function stops.

Therefore, in addition to the effect of the invention according to claim 1, the unit time consumption amount is reduced by making a speed of decoding the image information in the process in the target relay slower than the decoding speed before the relay function stops. Thus, the unit time consumption amount can be reduced reliably by simple process.

To achieve the object, an invention according to claim 5 relates to the network controlling apparatus according to claim 1, wherein the distribution information is moving picture information made by a plurality of still pictures, and the consumption amount control means reduces the unit time consumption amount by making display time of the still picture longer than the display time before stop of the relay function.

Therefore, in addition to the effect of the invention according to claim 1, the unit time consumption amount is reduced by making display time of the still picture as a component of moving picture information longer than the display time before stop of the relay function. Thus, the unit time consumption amount can be reduced reliably by simple process.

To achieve the object, an invention according to claim 6 relates to the network controlling apparatus according to any one of claims 1 to 5, wherein the distribution information is made by a plurality of continuous pieces of unit distribution information, the unit distribution information in a preset position in the distribution information is empty unit distribution information whose information amount provided for the process is zero, and the apparatus further comprises: a reset means such as a CPU, after the distribution to the target relay restarts, for resetting the unit time consumption amount in the target relay to the unit time consumption amount which is the same as that before the relay function stops; and a distribution control means such as a CPU, after the unit time consumption amount in the target relay is reset, for distributing the empty unit distribution information only to all of the relays except for the relay on the downstream in the distribution before stop of the relay function of the relay whose relay function stops.

Therefore, in addition to the effect of the invention according to any one of claims 1 to 5, the empty unit distribution information is distributed only to all of the relays except for the relay on the downstream in the distribution before stop of the relay function of the relay whose relay function stops. Consequently, the reproduction time base in the relay is becoming gradually close to the reproduction time base in the other relays. As a result, by reducing the unit time consumption amount in the relay on the downstream side of the relay whose relay function stops, a deviation between the reproduction position on the reproduction time base of the relay and that in the other relays can be eliminated.

To achieve the object, an invention according to claim 7 relates to a control method of controlling any of relays included in a network system including a distributor as a distribution source of distribution information and a plurality of relays connected to the distributor while forming a plurality of hierarchical levels and in which the distribution information is distributed from the distributor to the relays, the method comprising: a detecting step of detecting whether function of relaying the distribution information in any of the relays on the upstream in distribution of the distribution information to a target relay as the relay to be controlled stops or not; and a consumption amount control step of controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

Therefore, when the relay function in a relay on the upstream side in the network system stops, the consumption amount per unit time of distribution information stored in a relay on the downstream side is controlled to be smaller than that before the stop. Consequently, occurrence of interruption of the process or extreme process delay in the downstream relay caused by a situation such that while distribution of distribution information is interrupted, the distribution information is consumed at speed similar to that before the stop can be prevented without placing burden on the network system itself.

To achieve the object, an invention according to claim 8 makes a computer included in a network control apparatus for controlling any of a plurality of relays included in a network system including a distributor as a distribution source of distribution information and a plurality of relays connected to the distributor while forming a plurality of hierarchical levels, and in which the distribution information is distributed from the distributor to the relays, function as: detecting means for detecting whether function of relaying the distribution information in any of the relays on the upstream in distribution of the distribution information of a target relay as the relay to be controlled stops or not; and a consumption amount control means for controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

Therefore, when the relay function in the relay on the upstream side in the network system stops, the computer functions so that the consumption amount per unit time of distribution information stored in the relay on the downstream side becomes smaller than that before the relay function stops. Thus, occurrence of interruption of the process or extreme process delay in the downstream relay caused by the situation such that while distribution of distribution information is interrupted, the distribution information is consumed at a speed similar to that before the stop can be prevented without placing burden on the network system itself.

To achieve the object, an invention according to claim 9 relates to a connection mode controlling apparatus for controlling a connection mode among a distributor as a distribution source of distribution information and a plurality of relays connected to the distributor in a tree structure while forming a plurality of hierarchical levels in a network system in which the distribution information is distributed, the apparatus comprising: a retrieval means such as a CPU, when relay function in any of the relays stops, for retrieving any of the relays other than the relay whose relay function stops and capable of relaying the distribution information; a connecting means such as a CPU for connecting the relay to receive the distribution information to the retrieved another relay; and a distribution continuing means such as a CPU for continuing the distribution of the distribution information via the connected another relay by making distribution speed of the distribution information via the another relay faster than distribution speed before the relay function stops.

Therefore, when the relay function in any of the relays stops, another relay capable of relaying distribution information is retrieved. When the distribution of the distribution information is continued via the retrieved another relay, distribution speed of the distribution information is made faster than distribution speed before the relay function stops. Consequently, the process of distribution information in a relay belonging to a hierarchical level lower than the relay whose relay function stops can be continued.

To achieve the object, an invention according to claim 10 relates to the connection mode controlling apparatus according to claim 9, wherein the distribution continuing means continues the distribution while gradually increasing distribution speed of the distribution information via the connected another relay to, as an upper limit, the maximum value of the distribution speed specified in the network connecting the distributor and the relays.

Therefore, the distribution is continued while gradually increasing distribution speed of the distribution information via the connected another relay to, as an upper limit, the maximum value of the distribution speed, so that a relay belonging to a lower hierarchical level can obtain necessary distribution information more promptly.

To achieve the object, an invention according to claim 11 relates to the connection mode controlling apparatus according to claim 9 or 10, wherein the distribution continuing means continues the distribution by making distribution speed faster than distribution speed before the relay function stops until a storage amount in the relay as the distribution destination, of distributed distribution information becomes a predetermined amount.

Since the distribution is continued by making distribution speed faster than distribution speed before the relay function stops until a storage amount in the relay as the distribution destination, of distributed distribution information becomes a predetermined amount, the process of distribution information in a relay belonging to a hierarchical level lower than the relay whose relay function stops can be continued reliably.

To achieve the object, an invention according to claim 12 relates to a connection mode controlling apparatus for controlling a connection mode among a distributor as a distribution source of distribution information and a plurality of relays connected to the distributor in a tree structure while forming a plurality of hierarchical levels in a network system in which the distribution information is distributed, the apparatus comprising: a connecting means such as a CPU for connecting some of the plurality of relays to one of the relays, thereby forming a plurality of paths in which the distribution information is distributed to the one relay; and a distribution control means such as a CPU for distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.

Therefore, the main path and sub paths are formed so as to connect a plurality of relays to one relay, the distribution information distributed via a main path is used for an external output process in the one relay, and for distribution to another relay belonging to a hierarchical level lower than the one relay. The distribution information distributed via the main path as one of paths or a sub path is also used for distribution to further another relay belonging to a lower hierarchical level. By connecting multiple lines to each of nodes, redundancy can be increased in preparation of stop in the relay function in any of nodes, and the external output process in the relay belonging to the lower hierarchical levels can be prevented from being stopped.

To achieve the object, an invention according to claim 13 relates to a connection mode controlling apparatus according to claim 12, further comprising switching means such as a CPU, when the relay function of the relay belonging to a hierarchical level upper than the one relay on the main path stops, for switching the distribution information distributed to the one relay via the sub path so as to be provided for the external output process in the one relay.

Therefore, when the relay function of the relay belonging to a hierarchical level upper than the one relay on the main path stops, the distribution information distributed via the sub path is switched so as to be provided for the external output process. Thus, the external output process in the one relay is not interrupted.

To achieve the object, an invention according to claim 14 relates to the connection mode controlling apparatus according to claim 13, further comprising a retrieval means, when the distribution information distributed to the one relay via the sub path is switched by the switching means so as to be provided for the external output process in the one relay, for retrieving the distributor or a new relay belonging to the hierarchical level higher than the one relay, wherein the connecting means connects the distributor or the new relay retrieved by the retrieval means to the one relay, thereby forming a new path.

Therefore, when the distribution information distributed via the sub path is switched so as to be provided for the external output process, the distributor or a new relay belonging to the hierarchical level higher than the one relay is retrieved, and the distributor or the new relay retrieved is connected to the one relay, thereby forming a new path. Thus, redundancy can be assured and maintained.

To achieve the object, an invention according to claim 15 relates to the connection mode controlling apparatus according to claim 12, further comprising a retrieval means, when the relay function in the relay belonging to the hierarchical level higher than the one relay on the sub path stops, for retrieving either the distributor or the new relay belonging to the hierarchical level higher than the one relay, wherein the connecting means connects the distributor or the new relay retrieved by the retrieval means to the one relay, thereby forming a new sub path.

Therefore, when the relay function in the relay belonging to the hierarchical level higher than the one relay on the sub path stops, either the distributor or the new relay belonging to the hierarchical level higher than the one relay is retrieved and the distributor or the new relay retrieved is connected to the one relay, thereby forming a new sub path. Thus, even if the relay function in the relay on the sub path stops, a new sub path is formed and redundancy can be assured and maintained.

To achieve the object, an invention according to claim 16 relates to the connection mode controlling apparatus according to claim 14 or 15, wherein the retrieval means retrieves the distributor or the new relay so that another relay at the hierarchical level to which the one relay belongs is included in the new main path.

Therefore, the distributor or the relay is retrieved so that another relay at the hierarchical level to which the one relay belongs is included in the new main path, so that distribution information can be received via a relay at the same hierarchical level.

To achieve the object, an invention according to claim 17 relates to the connection mode controlling apparatus according to any one of claims 9 to 16, wherein the connecting means connects each of the relays at different hierarchical levels to the one relay, thereby forming a plurality of paths.

Therefore, since the relays at different hierarchical levels are connected to the one relay, thereby forming a plurality of paths to the one relay, even when the possibility of occurrence of a failure such as relay function stop varies among the levels, sufficient redundancy can be assured reliably.

To achieve the object, an invention according to claim 18 relates to a connection mode controlling method of controlling a connection mode among a distributor as a distribution source of distribution information and a plurality of relays connected to the distributor in a tree structure while forming a plurality of hierarchical levels in a network system in which the distribution information is distributed, the method comprising: a retrieval step, when relay function in any of the relays stops, of retrieving any of the relays other than the relay whose relay function stops and capable of relaying the distribution information; a connecting step of connecting the relay to receive the distribution information to the retrieved another relay; and a distribution continuing step, as a distribution connecting step of continuing distribution of the distribution information via the connected another relay, of continuing the distribution by making distribution speed of the distribution information via the another relay faster than distribution speed before the relay function stops.

Therefore, when relay function in any of the relays stops, another relay capable of relaying the distribution information is retrieved. At the time of continuing distribution of the distribution information via the retrieved another relay, distribution speed of the distribution information is made faster than distribution speed before the relay function stops. Thus, the process of distribution information in a relay belonging to a hierarchical level lower than the relay whose relay function stops can be continued.

To achieve the object, an invention according to claim 19 relates to a connection mode controlling method of controlling a connection mode among a distributor as a distribution source of distribution information and a plurality of relays connected to the distributor in a tree structure while forming a plurality of hierarchical levels in a network system in which the distribution information is distributed, the method comprising: a connecting step of connecting some of the plurality of relays to one of the relays, thereby forming a plurality of paths in which the distribution information is distributed to the one relay; and a distribution control step of distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.

Therefore, a main path and a sub path are formed so as to connect a plurality of relays to one relay, the distribution information distributed via the main path is used for an external output process in the one relay and for distribution to another relay belonging to a hierarchical level lower than the one relay, and the distribution information distributed via the main path as one of paths or the sub path is used for distribution to further another relay belonging to a lower hierarchical level. Thus, by using multiple paths for relays, redundancy can be increased in preparation for stop in the relay function in any of relays, and stop of the external output process in a relay belonging to a low hierarchical level can be prevented.

To achieve the object, an invention according to claim 20 makes a computer included in a control mode controlling apparatus for controlling a connection mode among a distributor such as a node as a distribution source of distribution information and a plurality of relays such as nodes connected to the distributor in a tree structure while forming a plurality of hierarchical levels in a network system in which the distribution information is distributed, function as: a retrieval means, when relay function in any of the relays stops, for retrieving any of the relays other than the relay whose relay function stops and capable of relaying the distribution information; a connecting means for connecting the relay to receive the distribution information to the retrieved another relay; and a distribution continuing means, as a distribution continuing means for continuing distribution of the distribution information via the connected another relay, of continuing the distribution by making distribution speed of the distribution information via the another relay faster than distribution speed before the relay function stops.

Therefore, when relay function in any of the relays stops, another relay capable of relaying the distribution information is retrieved. At the time of continuing distribution of the distribution information via the retrieved another relay, the computer functions to continue the distribution by making distribution speed of the distribution information faster than distribution speed before the relay function stops. Thus, the process of distribution information in a relay belonging to a hierarchical level lower than the relay whose relay function stops can be continued.

To achieve the object, an invention according to claim 21 makes a computer included in a connection mode controlling apparatus for controlling a connection mode among a distributor as a distribution source of distribution information and a plurality of relays connected to the distributor in a tree structure while forming a plurality of hierarchical levels in a network system in which the distribution information is distributed, function as: a connecting means for connecting some of the plurality of relays to one of the relays, thereby forming a plurality of paths in which the distribution information is distributed to the one relay; and a distribution control means for distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.

Therefore, a main path and a sub path are formed so as to connect a plurality of relays to one relay, the distribution information distributed via the main path is used for an external output process in the one relay and for distribution to another relay belonging to a hierarchical level lower than the one relay, and the distribution information distributed via the main path as one of paths or the sub path is used for distribution to further another relay belonging to a lower hierarchical level. Thus, by using multiple paths for relays, redundancy can be increased in preparation for stop in the relay function in any of relays, and stop of the external output process in a relay belonging to a low hierarchical level can be prevented.

### Effects of the Invention

According to the invention of claim 1, when the relay function in a relay on the upstream side in the network system stops, the consumption amount per unit time of the distribution information stored in the relay on the downstream side is controlled to be smaller than that before the stop. Consequently, process interruption or occurrence of an extreme process delay in the downstream relay caused by the situation such that the distribution of the distribution information is interrupted and, on the other hand, the distribution information is consumed at a similar speed as that before the interruption can be prevented without applying a burden on the network system itself.

Therefore, even in the case where the relay function in any of relays included in the network system stops, the stopped relay function can be recovered without exerting a large influence on the process in the downstream relay. Thus, distribution information can be reliably distributed while improving the reliability of the network system itself.

In the invention according to claim 2, in addition to the effect of the invention of claim 1, the distribution information is image information, and the unit time consumption amount is reduced by making a speed of reducing a storage amount of the image information in buffer means slower than the reducing speed before the relay function stops. Thus, a unit time consumption amount can be reduced with a simple configuration without performing complicated speed control process.

According to the invention of claim 3, in addition to the effect of the invention according to claim 2, the speed of reducing the storage amount is slowed by repeatedly outputting the same still picture as a component of moving picture information a plurality of times. Thus, the unit time consumption amount can be reduced reliably by simple process.

According to the invention of claim 4, in addition to the effect of the invention according to claim 1, the unit time consumption amount is reduced by making a speed of decoding the image information in the process in the target relay slower than the decoding speed before the relay function stops. Thus, the unit time consumption amount can be reduced reliably by simple process.

According to the invention of claim 5, in addition to the effect of the invention according to claim 1, the unit time consumption amount is reduced by making display time of the still picture as a component of moving picture information longer than the display time before stop of the relay function. Thus, the unit time consumption amount can be reduced reliably by simple process.

According to the invention of claim 6, in addition to the effect of the invention according to any one of claims 1 to 6, after the relay function recovers, the empty unit distribution information is distributed only to all of the relays except for the relay on the downstream in the distribution before stop of the relay function of the relay whose relay function stops. Consequently, the reproduction time base in the relay is becoming gradually close to the reproduction time base in the other relays. As a result, by reducing the unit time consumption amount in the relay on the downstream side of the relay whose relay function stops, a deviation between the reproduction position on the reproduction time base of the relay and that in the other relays can be eliminated.

According to the invention of claim 7, when the relay function in a relay on the upstream side in the network system stops, the consumption amount per unit time of distribution information stored in a relay on the downstream side is controlled to be smaller than that before the stop. Consequently, occurrence of interruption of the process or extreme process delay in the downstream relay caused by a situation such that while distribution of distribution information is interrupted, the distribution information is consumed at speed similar to that before the stop can be prevented without placing burden on the network system itself.

Therefore, even in the case where the relay function of any of relays included in the network system stops, without exerting a large influence on the process of the downstream relay, the stopped relay function can be recovered. Thus, distribution information can be distributed reliably while improving reliability of the network system itself.

According to the invention of claim 8, when the relay function in the relay on the upstream side in the network system stops, the computer functions so that the consumption amount per unit time of distribution information stored in the relay on the downstream side becomes smaller than that before the relay function stops. Thus, occurrence of interruption of the process or extreme process delay in the downstream relay caused by the situation such that while distribution of distribution information is interrupted, the distribution information is consumed at a speed similar to that before the stop can be prevented without placing burden on the network system itself.

Therefore, even in the case where the relay function of any of relays included in the network system stops, without exerting a large influence on the process of the downstream relay, the stopped relay function can be recovered. Thus, distribution information can be distributed reliably while improving reliability of the network system itself.

According to the invention of claim 9, when the relay function in any of the relays stops, another relay capable of relaying distribution information is retrieved. When the distribution of the distribution information is continued via the retrieved another relay, distribution speed of the distribution information is made faster than distribution speed before the relay function stops. Consequently, the process of distribution information in a relay belonging to a hierarchical level lower than the relay whose relay function stops can be continued.

Therefore, even another relay connected below the relay whose relay function stops can continue a process such as reproduction using distribution information without influence of the function stop.

According to the invention of claim 10, in addition to the effect of the invention of claim 9, the distribution is continued while gradually increasing distribution speed of the distribution information via the connected another relay to, as an upper limit, the maximum value of the distribution speed, so that a relay belonging to a lower hierarchical level can obtain necessary distribution information more promptly.

According to the invention of claim 11, in addition to the effect of the invention of claim 9 or 10, since the distribution is continued by making distribution speed faster than distribution speed before the relay function stops until a storage amount in the relay as the distribution destination, of distributed distribution information becomes a predetermined amount, the process of distribution information in a relay belonging to a hierarchical level lower than the relay whose relay function stops can be continued reliably. According to the invention of claim 4, the main path and sub paths are formed so as to connect a plurality of relays to one relay, the distribution information distributed via a main path is used for an external output process in the one relay, and for distribution to another relay belonging to a hierarchical level lower than the one relay. The distribution information distributed via the main path as one of paths or a sub path is also used for distribution to further another relay belonging to a lower hierarchical level. By connecting multiple lines to each of nodes, redundancy can be increased in preparation of stop in the relay function in any of relays, and the external output process in the relay belonging to the lower hierarchical levels can be prevented from being stopped.

According to the invention of claim 12, the main path and sub paths are formed so as to connect a plurality of relays to one relay, the distribution information distributed via a main path is used for an external output process in the one relay, and for distribution to another relay belonging to a hierarchical level lower than the one relay. The distribution information distributed via the main path as one of paths or a sub path is also used for distribution to further another relay belonging to a lower hierarchical level. By connecting multiple lines to each of nodes, redundancy can be increased in preparation of stop in the relay function in any of nodes, and the external output process in the relay belonging to the lower hierarchical levels can be prevented from being stopped.

According to the invention of claim 13, in addition to the effect of the invention of claim 12, when the relay function of the relay belonging to a hierarchical level upper than the one relay on the main path stops, the distribution information distributed via the sub path is switched so as to be provided for the external output process. Thus, the external output process in the one relay is not interrupted.

According to the invention of claim 14, in addition to the effect of the invention of claim 13, when the distribution information distributed via the sub path is switched so as to be provided for the external output process, the distributor or a new relay belonging to the hierarchical level higher than the one relay is retrieved, and the distributor or the new relay retrieved is connected to the one relay, thereby forming a new path. Thus, redundancy can be assured and maintained.

According to the invention of claim 15, in addition to the effect of the invention of claim 12, when the relay function in the relay belonging to the hierarchical level higher than the one relay on the sub path stops, either the distributor or the new relay belonging to the hierarchical level higher than the one relay is retrieved and the distributor or the new relay retrieved is connected to the one relay, thereby forming a new sub path. Thus, even if the relay function in the relay on the sub path stops, a new sub path is formed and redundancy can be assured and maintained.

According to the invention of claim 16, in addition to the effect of the invention of claim 14 or 15, the distributor or the relay is retrieved so that another relay at the hierarchical level to which the one relay belongs is included in the new main path, so that distribution information can be received via a relay at the same hierarchical level.

According to the invention of claim 17, in addition to the effect of the invention of any one of claims 9 to 16, the relays at different hierarchical levels are connected to the one relay, thereby forming a plurality of paths to the one relay. Consequently, even when the possibility of occurrence of a failure such as relay function stop varies among the levels, sufficient redundancy can be assured reliably.

According to the invention of claim 18, when the relay function in any of the relays stops, another relay capable of relaying the distribution information is retrieved. At the time of continuing distribution of the distribution information via the retrieved another relay, distribution speed of the distribution information is made faster than distribution speed before the relay function stops. Thus, the process of distribution information in a relay belonging to a hierarchical level lower than the relay whose relay function stops can be continued.

Therefore, even another relay connected below the relay whose relay function stops can continue a process such as reproduction using distribution information without influence of the function stop.

According to the invention of claim 19, a main path and a sub path are formed so as to connect a plurality of relays to one relay, the distribution information distributed via the main path is used for an external output process in the one relay and for distribution to another relay belonging to a hierarchical level lower than the one relay, and the distribution information distributed via the main path as one of paths or the sub path is used for distribution to further another relay belonging to a lower hierarchical level. Thus, by using multiple paths for relays, redundancy can be increased in preparation for stop in the relay function in any of relays, and stop of the external output process in a relay belonging to a low hierarchical level can be prevented.

According to the invention of claim 20, when relay function in any of the relays stops, another relay capable of relaying the distribution information is retrieved. At the time of continuing distribution of the distribution information via the retrieved another relay, the computer functions to continue the distribution by making distribution speed of the distribution information faster than distribution speed before the relay function stops. Thus, the process of distribution information in a relay belonging to a hierarchical level lower than the relay whose relay function stops can be continued.

Therefore, even another relay connected below the relay whose relay function stops can continue a process such as reproduction using distribution information without influence of the function stop.

According to the invention of claim 21, the computer functions so that a main path and a sub path are formed so as to connect a plurality of relays to one relay, the distribution information distributed via the main path is used for an external output process in the one relay and for distribution to another relay belonging to a hierarchical level lower than the one relay, and the distribution information distributed via the main path as one of paths or the sub path is used for distribution to further another relay belonging to a lower hierarchical level. Thus, by using multiple paths for relays, redundancy can be increased in preparation for stop in the relay function in any of relays, and stop of the external output process in a relay belonging to a low hierarchical level can be prevented.

### Brief Description of the Drawings

FIGS. 1A and 1B are block diagrams showing a schematic configuration of a network system according to a first embodiment. FIG. 1A is a block diagram showing a physical connection mode of the network system. FIG. 1B is a block diagram showing a connection mode of the network system as topology.
FIG. 2A is a diagram showing the configuration of a node included in the network system according to the first embodiment, and FIG. 2B is a diagram showing the details of information stored in a storing unit 3.
FIG. 3 is a flowchart showing whole processes in a node according to the first embodiment.
FIGS. 4A to 4E are flowcharts (I) showing the details of the processes in a node according to the first embodiment, and show upper-order node connecting process, data receiving process, lower-order node connecting process, exit message responding process, and node exiting process, respectively.
FIGS. 5A and 5B are flowcharts (II) showing the details of the processes in a node in the first embodiment, and show data transmitting process and data reproducing processes, respectively.
FIG. 6 is a flowchart showing data displaying process in a node according to the first embodiment.
FIGS. 7A, 7B, and 7C are diagrams (I) showing a packet distribution state in the network system according to the first embodiment and are diagrams (i), (ii), and (iii), respectively, illustrating the details of the state.
FIGS. 8A, 8B, and 8C are diagrams (II) showing a packet distribution state in the network system according to the first embodiment and are diagrams (iv), (v), and (vi), respectively, illustrating the details of the state.
FIGS. 9A, 9B, and 9C are diagrams (III) showing a packet distribution state in the network system according to the first embodiment and are diagrams (vii), (viii), and (ix), respectively, illustrating the details of the state.
FIGS. 10A and 10B are diagrams (i) and (ii), respectively, showing the details of a packet distribution state in the case where exit of a node occurs in the network system according to the first embodiment.
FIGS. 11A, 11B, and 11C are diagrams (i), (ii), and (iii), respectively, showing the details of a packet distribution state in the case where reconnection after the node exit is finished in the network system according to the first embodiment.
FIGS. 12A, 12B, and 12C are diagrams (i), (ii), and (iii), respectively, showing the details of a packet distribution state in the case where reproduction delay recovers after the node exit and the reconnection in the network system according to the first embodiment.
FIGS. 13A, 13B, and 13C are diagrams showing transmission/reception of data in a node in the case where reproduction delay recovers after the node exit and the reconnection in the network system according to the first embodiment and illustrating a state before the node exit, a state after the node exit, and a state of reproduction delay recovery, respectively.
FIGS. 14A and 14B are flowcharts showing data displaying process in a node in first and second modifications, respectively, of the first embodiment.
FIG. 15 is a block diagram showing a schematic configuration of a network system according to a second embodiment.
FIG. 16 is a block diagram showing a general configuration of a node included in the network system according to the second embodiment.
FIGS. 17A and 17B are diagrams showing a detailed configuration of nodes according to the second embodiment, and illustrating the details of a topology table and an operation of a buffer memory, respectively.
FIG. 18 is a flowchart showing normal distributing operation in the network system according to the second embodiment.
FIG. 19 is a block diagram showing a schematic configuration of the network system according to the second embodiment after the relay function in part of the nodes stops.
FIGS. 20A, 20B, and 20C are a flowchart showing operations in a lower-order node when the relay function in part of nodes stops and illustrating operations of the buffer memory.
FIG. 21 is a diagram showing operation of a lower-order node when the relay function in part of nodes stops.
FIGS. 22A and 22B are diagrams showing operation in a network system according to a modification of the second embodiment. FIG. 22A is a flowchart showing the operation, and FIG. 22B is a diagram showing operation of a buffer memory corresponding to the operation.
FIG. 23 is a block diagram showing a schematic configuration of a network system according to a third embodiment.
FIG. 24 is a block diagram showing a schematic configuration of the network system according to the third embodiment after the relay function in part of nodes stops.
FIG. 25 is a flowchart showing normal distributing operation in the network system according to the third embodiment.
FIG. 26 is a flowchart showing operation in a lower-order node when the relay function stops in part of the nodes.

### Description of Reference Numerals

1,100 CPU
2 connection authenticating unit
3 storing unit
4 input unit
5 output unit
6 message transmitting/receiving unit
7 data transmitting/receiving unit
8, 109 bus
10 first upper-order node information storing area
11 second upper-order node information storing area
12 transmission data number information storing area
14 reception data number information storing area
15 reproduction speed information storing area
16 specified value storing area
17 ring buffer area
102 decoder
103 table memory
104 buffer memory
105 broadband interface
106 timer
107 speaker
108 CRT
NS network system
S server
N, N₁, N₂, N₃, N₄, N₅, N₆, N₇, N₈, N₉, N₁₀, N₁₁, N₁₂, N₁₃, N₁₄, 0-1, 1-1, 1-2, 1-3, 2-1, 2-2, 3-1, 3-2, 3-3, 3-4, 4-1, 4-2, 4-3 node
NT network
L, L' line
LM, LM' main line
LS, LS' sub line
NT, NT2 network system

### Best Mode for carrying out the Invention

### (I) First Embodiment

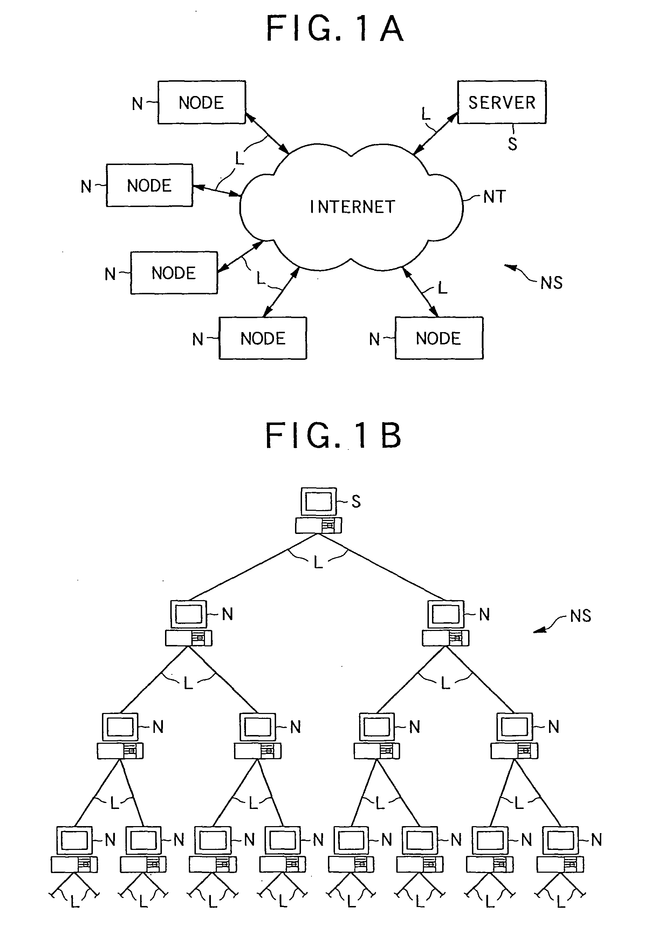

A first embodiment of the present invention will be described with reference to FIGS. 1A and 1B to FIGS. 13A to 13C. The first embodiment to be described below relates to the case of applying the present invention to a network control process for controlling a distribution mode of contents in a network system in which contents is distributed and which includes a server as a node that is a distributing apparatus as a distribution source of contents as distribution information and a plurality of nodes as user terminals connected as a tree structure including a plurality of hierarchical levels below the server.

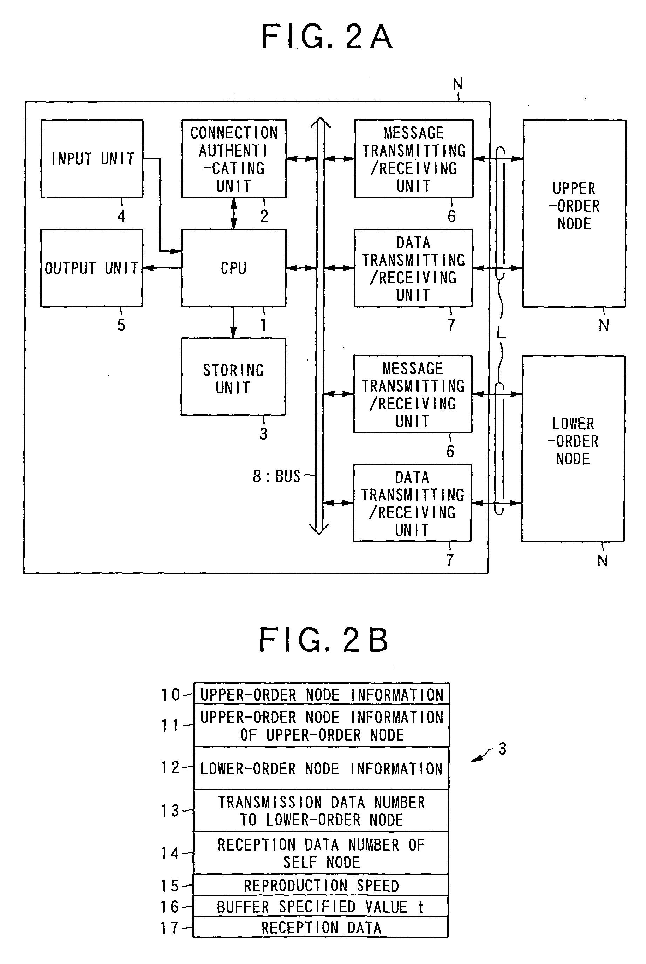

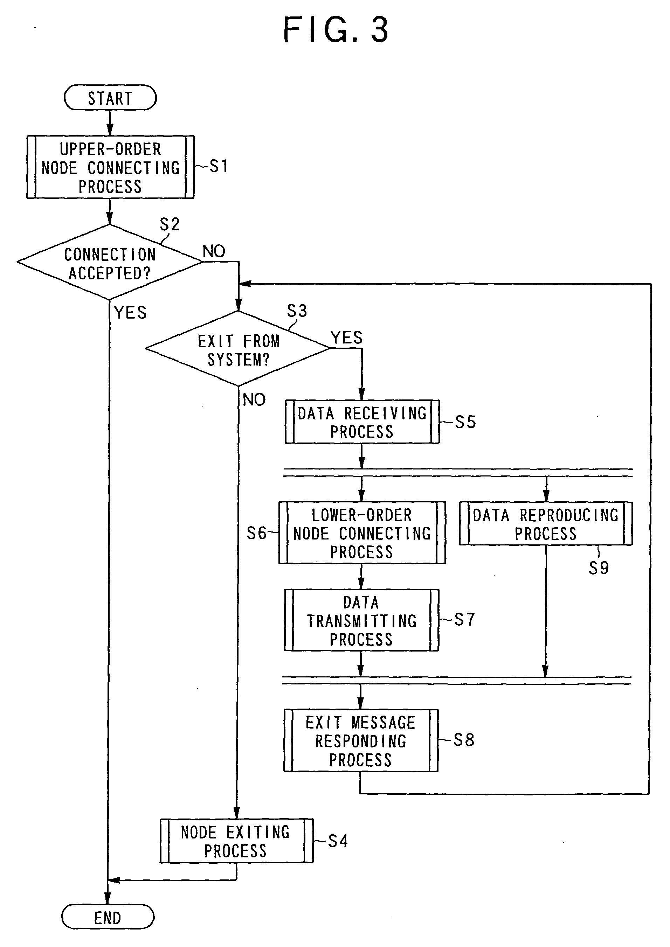

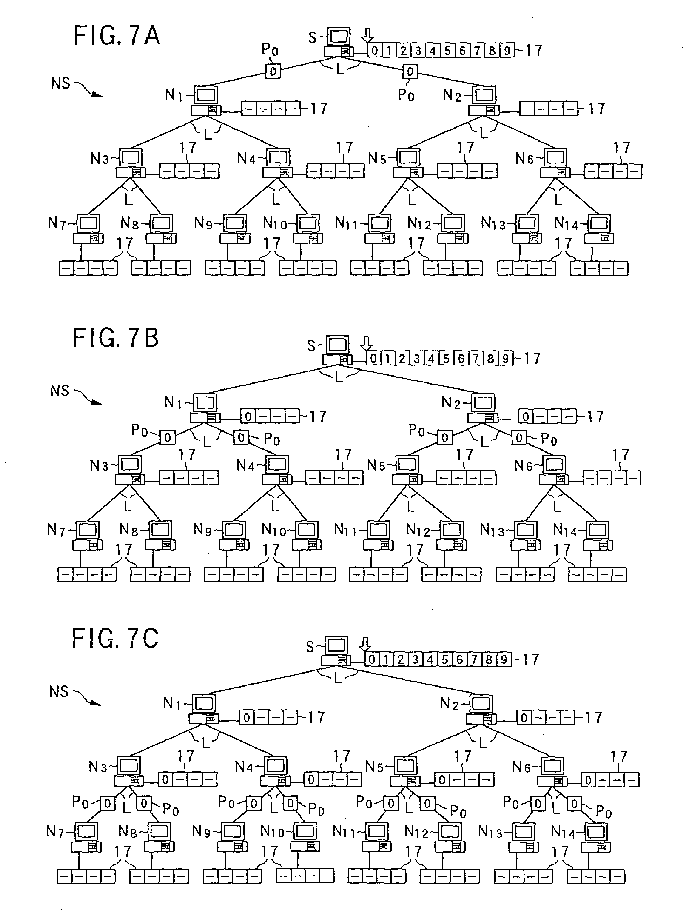

FIGS. 1A and 1B are diagrams showing a schematic configuration of a network system according to the first embodiment. FIGS. 2A and 2B are block diagrams showing a detailed configuration of a node included in the network system. FIGS. 3 to 6 are flowcharts each showing the distributing process according to the invention, executed in the node. FIGS. 7A to 7C to FIGS. 13A to 13C are diagrams concretely illustrating the distributing process.

In the case of seeing the network system of the first embodiment as a physical connection mode, as shown in FIG. 1A, the network system NS is constructed so that the server S and a plurality of nodes N as user terminals are connected to each other via lines L as wire circuits or wireless circuits so as to be able to transmit/receive information to/from each other via a network NT such as the Internet line. In the case of seeing the network system NS shown in FIG. 1A as topology whose apex is the server S, as shown in FIG. 1B, two nodes N are connected to the server S via the lines L, and two nodes N are connected to each of the nodes N. By the topology in which the nodes N are connected in a tree shape using the server S as an apex, required contents is distributed from the server S to a node N requiring the contents.

A concrete configuration of a node N included in the network system S will now be described with reference to FIGS. 2A and 2B.

As shown in FIG. 2A, the node N according to the first embodiment includes a CPU 1 as detecting means, a consumption amount control means, a reset means, and a distribution control means, a connection authenticating unit 2, a storing unit 3 constructed by a hard disk, a semiconductor memory, or the like, an input unit 4 made by a mouse, a keyboard, and the like, an output unit 5 made by a display for displaying an image, a speaker for outputting sound, a decoder for decoding sound, and the like, a message transmitting/receiving unit 6, and a data transmitting/receiving unit 7. The CPU 1, connection authenticating unit 2, storing unit 3, input unit 4, output unit 5, message transmitting/receiving unit 6, and data transmitting/ receiving unit 7 are connected to each other via a bus 8 so as to be able to transmit/receive information to/from each other.

The outline operation will be described.
First, the message transmitting/receiving unit 6 is functionally divided in: a part connected to a node N at a higher hierarchical level (or the server S) via the line L and transmitting/receiving a message to/from the node N at the higher hierarchical level; and a part connected to a node N at a lower hierarchical level via the line L and transmitting/receiving a message to/from the node N at the lower hierarchical level. The message denotes here various control information necessary for distributing required contents in the network system NS. By transmitting/receiving the message, an environment in which actual contents is distributed is formed.

On the other hand, like the message transmitting/receiving unit 6, the data transmitting/receiving unit 7 is functionally divided in: a part connected to a node N at a higher hierarchical level or the like via the line L and transmitting/ receiving data to/from the node N at the higher hierarchical level or the like; and a part connected to a node N at a lower hierarchical level via the line L and transmitting/ receiving data to/from the node N at the lower hierarchical level. The data denotes data in a packet form including sound or an image constructing contents itself distributed in the network system NS. The data is distributed as contents from the server S to each of the nodes under the environment formed by transmission/ reception of the message.

For data in a packet form, it is assumed that packet numbers continuous from the head of contents are assigned to packets of data constructing a lump of contents (for example, contents of one movie or contents of one music piece). Data transmitted as the packet is divided in packs as units smaller than packets. Also to the packs, pack numbers which are continuous from the head of contents are assigned.

For example, in the case where the network system NS is a network system for distributing chargeable contents, the connection authenticating unit 2 executes so-called authenticating process of determining whether the node N is a node to which distribution of the contents is permitted or not under control of the CPU 1 by transmitting/receiving authentication information to/from the server S in the case where the node N enters the network system NS or in the case such that another node N is newly connected.

Further, the storing unit 3 rewritably stores information which will be described later temporarily or in a nonvolatile manner and, as necessary, outputs the information to the CPU 1.

On the other hand, when operation such as designation of contents to be reproduced is executed by the user of the node N, the input unit 4 generates an operation signal corresponding to the executed operation and outputs the operation signal to the CPU 1. The CPU 1 receives the operation signal and controls another component of the node N, thereby executing process of distributing and reproducing the desired contents.

The reproducing process is executed by using the output unit 5 under control of the CPU 1.

The detailed configuration of the storing unit 3 will be described concretely with reference to FIG. 2B. FIG. 2B shows the storing unit 3 divided in areas by types of information stored.

As shown in FIG. 2B, the storing unit 3 is constructed by: a first upper-order node information storing area 10 that stores upper-order node information indicative of the node N immediately higher than the node N including the storing unit 3 on the topology shown in FIG. 1B; a second upper-order node information storing area 11 that stores upper-order node information indicative of upper-order node N immediately higher than the upper-order node N on the topology; a lower-order node information storing area 12 that stores lower-order node information of one or more nodes N connected immediately lower than the node N including the storing unit 3 on the topology, the number of pieces of the information being equal to the number of the lower nodes; a transmission data number information storing area 13 that stores transmission data number information indicative of the number of a pack including data transmitted to the lower-order node; a reception data number information storing area 14 that stores reception data number information indicative of the number of a pack including data received by the node N itself including the storing unit 3; a reproduction speed information storing area 15 that stores reproduction speed information indicative of reproduction speed in the output unit 5, of an image, sound, or the like corresponding to the received data; a specified value storing area 16 that stores a specified value of the minimum storage data amount or the like which is preset for a ring buffer area to be described later; and a ring buffer area 17 that temporarily stores data actually distributed as contents.

The node information stored in the first upper-order node information storing area 10, the second upper-order node information storing area 11, and the lower-order node information storing area 12 includes, concretely, an IP (Internet Protocol) global address indicative of a node N.

The ring buffer area 17 is a storing area of a ring buffer memory type that temporarily stores data corresponding to distributed contents in an FIFO manner. The ring buffer area 17 sequentially stores packets (and packs) as the contents data and outputs the packets in accordance with the storing order as a rule so as to be provided for the reproducing process in the output unit 5.

Next, processes for allowing a new node N to newly enter the network system NS according to the first embodiment, receiving distributed data corresponding to contents, and reproducing the contents, and processes performed in the case where the function of relaying data to the other nodes N connected to the new node N is stopped during the reproduction due to, for example, exit of the new node from the network system NS will be concretely described as processes in each node N with reference to the flowcharts shown in FIGS. 3 to 6.

In the case of allowing a new node N to be located in the position immediately lower than any of nodes N in the existing network system NS, the entering node N (hereinbelow, the node N which newly enters the network system NS and executes data receiving process and reproducing process along the flowchart of FIG. 3 will be called "entering node N" so as to be distinguished from the other nodes already connected to the network system NS) performs a process of connecting the entering node N to the upper-order node N (or the server S at the highest order in the network system NS) (steps S1 and S2). When a request for the connection is rejected by the upper-order node N (NO in step S2), the entering node N cannot join the existing network system NS at that time, so that the process in the entering node N is finished.

On the other hand, after entrance is permitted by the upper-order node N (or the server S) in the determination of step S1 and necessary connecting process is executed with the upper-order node N (or the server S) (YES in step S2), whether operation of exit from the network system NS in which the node N exists is executed by the input unit 4 in the entering node N or not is determined (step S3).

When the entering node N exits from the network system NS (YES in step S3), the exiting operation is executed in the entering node N (step S4), and the process in the entering node N is finished.

On the other hand, when the process of exit from the network system NS is not performed but the data receiving process or the like is continuously executed (NO in step S3), the entering node N performs a process of receiving necessary data from the upper-order node N (step S5), and reproduces the received data and outputs the reproduced data by using the output unit 5 (step S9). The entering node N performs an exit message responding process for disconnecting the connection between the another node N connected to the entering node N and the entering node N as necessary with the connected another node N (step S8), returns to the step S3, and continuously executes the data receiving and reproducing processes.

In parallel with the data reproducing process (step S9), the entering node N executes a process of connecting another node N to a level immediately below the entering node N (step S6) and a process of transmitting (relaying) data to the connected lower-order node N (step S7).

The processes in step S1 and steps S4 to S9 in FIG. 3 will be sequentially described in detail.

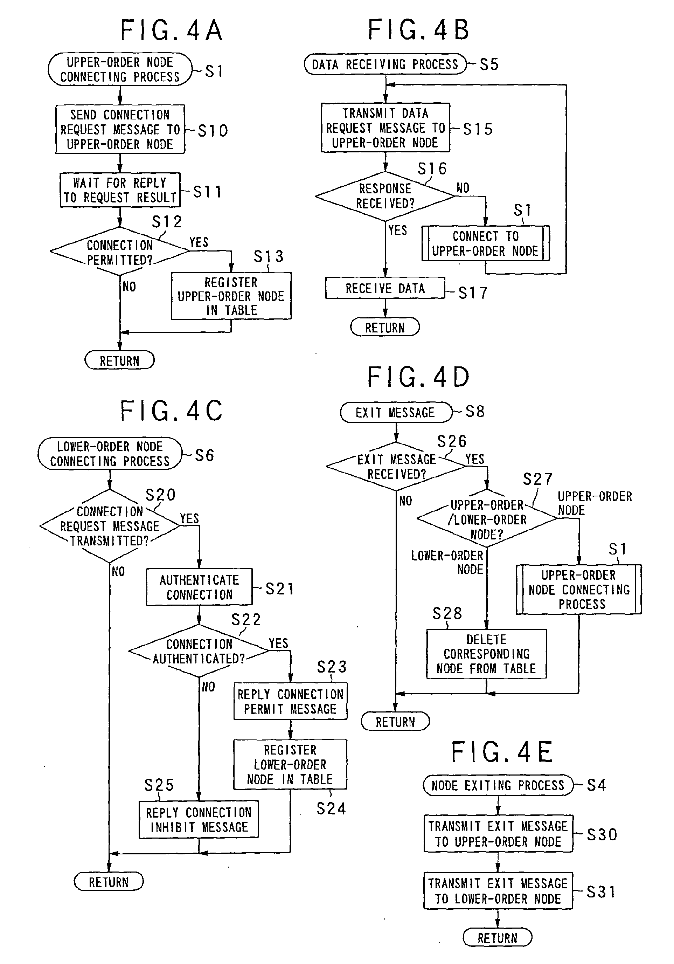

First, the process of the step S1 will be described in detail by using the flowchart of FIG. 4A.

As shown in FIG. 4A, in the process of the step S1, first, the entering node N transmits a message of request for entrance of the entering node N as a node N immediately below another node N as an immediately upper-order node to the upper-order node N via a line L (step S10), waits for a reply to the request from the upper-order node N (step S11), and confirms the reply (step S12).

When the entering node N is permitted to enter the network system NS in response to the reply (YES in step S12), the entering node N stores the upper-order node information including the IP address corresponding to the immediately upper-order node N in the first upper-order node information storing area 10 in the storing unit 3 of the entering node N, stores upper-order node information of the upper-order node including the IP address corresponding to another node higher than the upper-order node N in the second upper-order node information storing area 11 in the storing unit 3 of the entering node N (step S13), and moves to the step S2 shown in FIG. 3.

On the other hand, when the entering node N is not permitted to enter the network system NS in the determination of the step S12 (NO in step S12), the entering node N cannot display is function. In this case as well, after shift to the step S2 shown in FIG. 2 (NO in step S2), the process in the entering node N is finished.

Next, the data receiving process in step S5 shown in FIG. 3 will be described in detail by using the flowchart shown in FIG. 4B.

As shown in FIG. 4B, in the process of the step S5, first, the entering node N transmits a message of request for desired data to the immediately upper-order node connected at that time via the line L (step S15) and acknowledges whether there is a transmission permission reply from the upper-order node N to the message or not (step S16).

When there is the transmission permission reply (YES in step S16), the entering node N receives a packet including data desired by the entering node N in accordance with the reply (step S17) and moves to step S6 or S9 shown in FIG. 3. On the other hand, when the transmission permission reply is not obtained from the upper-order node N in the determination of step S16 (NO in step S16), there is the possibility that some failure occurs on the line between the upper-order node N and the entering node N. Consequently, the entering node N performs the above-described process in the step S1 (refer to FIG. 4A) to eliminate the failure and to be able to receive data, returns again to the process of the step S15, and receives the data from the re-connected upper-order node N (steps S15 to S17).

Next, lower-order node connecting process in step S6 in FIG. 3 will be described by using the flowchart shown in FIG. 4C will be described.

As shown in FIG. 4C, in the process of step S6, first, whether the connection request message from the node N connected immediately below the entering node N has been transmitted to the entering node N or not is determined (step S20). When the connection request message has not been transmitted (NO in step S20), the entering node N shifts to the step S7 in FIG. 3. When the connection request message has been transmitted (YES in step S20), whether authenticating process of determining whether the lower-order node N is a node N having the qualification of entering the network system NS or not is executed between the lower-order node N which has sent the connection request message and the entering node N (or between the lower-order node N and the server S via the entering node N) by, for example, the connection authenticating unit 2 included in each of the lower-order node N and the entering node N (steps S21 and S22).

In the case where the lower-order node N cannot be permitted to enter the network system NS by the authenticating process (NO in step S22), the fact is transmitted as a connection inhibit message to the lower-order node N (step S25), and the program moves to the step S7 shown in FIG. 3.

On the other hand, when the lower-order node N is permitted to enter the network system NS in the authenticating process in the determination of the step S22 (YES in step S22), the fact is transmitted as a connection permit message to the lower-order node N (step S23), the lower-order node information including the IP address corresponding to the immediately lower-order node N or the like is stored in the lower-order node information storing area 12 in the storing unit 3 of the entering node N (step S24), and the program moves to the step S7 shown in FIG. 3.

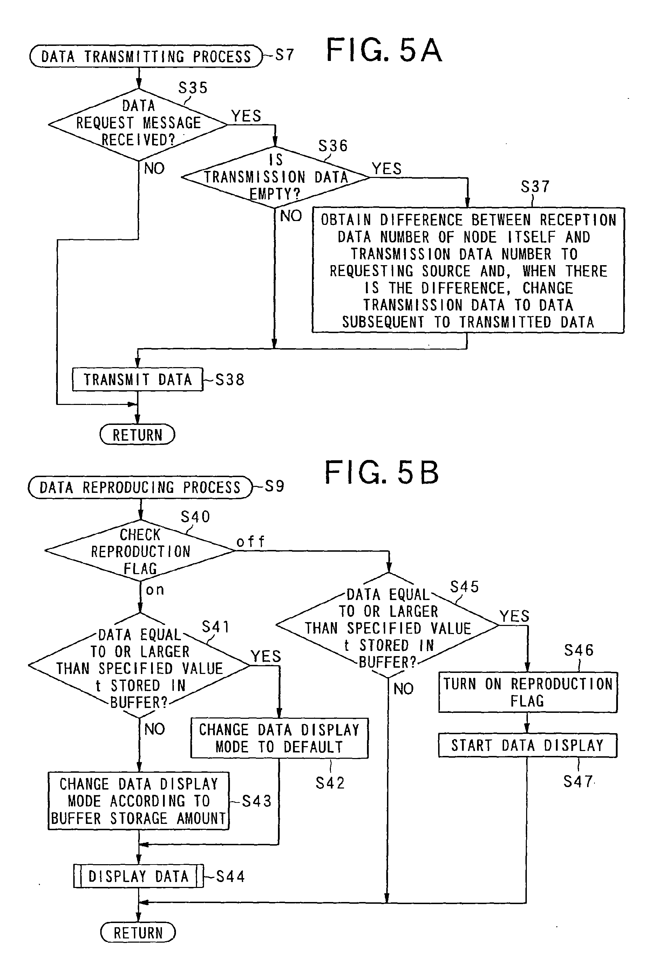

Next, the data transmitting process of the step S7 shown in FIG. 3 will be described in detail by using the flowchart of FIG. 5A.

As shown in FIG. 5A, in the process of the step S7, first, whether a request for transmitting data to be reproduced in the lower-order node N has been transmitted as a message from the node N connected immediately lower than the entering node N or not is determined (step S35). When the message is not received by the entering node N (NO in step S35), the program moves to the step S8 in FIG. 3.

On the other hand, when it is determined in step S35 that the message has been transmitted (YES in step S35), next, in response to the message, whether or not a packet to be transmitted from the entering node N is an empty packet which will be described in detail later (packet which includes only header information of the like and does not include entity image information constructing contents or the like) is determined (step S36). When the packet is not an empty packet (NO in step S36), the packet which is not an empty packet is transmitted as data of the contents to the lower-order node N via the line L (step S38), and the program moves to the step S8 in FIG. 3.

On the other hand, when it is determined in step S36 that the packet to be transmitted is an empty packet (YES in step S36), the number of a pack received by the entering node N just before the process in the step S7 shown in FIG. 5A starts is compared with the number of a pack of entity data to be transmitted to the lower-order node N (that is, entity data such as image data, sound data, or the like which is not included in an empty packet). In the case where the numbers are not sequential (that is, an empty packet is received), by connecting the pack number immediately preceding that of the empty packet and the pack number immediately subsequent to that of the empty packet, the immediately subsequent pack number is arranged after the immediately-preceding pack number (step S37), data as contents constructed in the pack having the arranged pack number is transmitted to the lower-order node N (step S38), and the program moves to the step S8 shown in FIG. 3.

Next, by using the flowchart of FIG. 4D, the exit message responding process in the step S8 shown in FIG. 3 will be described in detail.

As shown in FIG. 4D, in the process of the step S8, first, a message that the node N is going to exit from the network system NS has been received from any of the other nodes N connected to the entering node N (concretely, either the upper-order node N connected immediately higher than the entering node N or the lower-order node N connected immediately lower than the entering node N) or not is determined (step S26). In the case where the message has not been received (NO in step S26), the program returns to the step S3 in FIG. 3. On the other hand, in the case where the message of a request for exit is received (YES in step S26), which one of the immediately upper-order node N and the immediately lower-order node N has sent the message is determined (step S27).

When the exit request message has been sent from the immediately upper-order node N ("upper-order node" in step S27), on the basis of node information indicative of the node immediately higher than the upper-order node N stored in the second upper-order node information storing area 11 in the storing unit 3 of the entering node N, the upper-order node connecting process described above in the step S1 is executed with the node N connected immediately higher than the upper-order node N (that is, the node N which has sent the exit request message), thereby recovering the topology (step S1), and the program returns to the step S3 in FIG. 3.

On the other hand, when the exit request message has been transmitted from the immediately lower-order node N ("lower-order node" in step S27), node information of the lower-order node N stored in the lower-order node information storing area 12 in the storing unit 3 of the entering node N is deleted from the lower-order node information storing area 12 (step S28), and the program returns to the step S3 in FIG. 3.

Next, the node exit process (process of exit of the entering node N itself from the network system NS) in the step S4 shown in FIG. 3 will be described in detail with reference to the flowchart of FIG. 4E.

As shown in FIG. 4E, in the process of the step S4, first, the above-described exit request message (refer to FIG. 4D) is transmitted to the upper-order node N connected immediately higher than the entering node N (step S30). Next, the above-described exit request message is similarly transmitted to the lower-order node N connected immediately lower than the entering node N (step S31). After transmission of the messages, the entering node N executes the process of exiting from the network system NS.

Finally, the data reproducing process in the step S9 shown in FIG. 3 will be described in detail by using the flowchart shown in FIG. 5B.

As shown in FIG. 5B, in the process of the step S9, first, a reproduction flag in the entering node N (that is, a reproduction flag indicating whether the reproducing process using the output unit 5 is being executed or not) is checked (step S40). When the reproduction flag is "off" (that is, the reproducing process is not executed at present in the output unit 5) (OFF in step S40), next, whether data of an amount equal to or larger than a specified value "t" as a specified value of a preset storage amount has been already stored in the ring buffer area 17 or not is determined (step S45).

When data of an amount equal to or larger than the specified value "t" is not stored in the ring buffer area 17 (NO in step S45), if the data reproducing process is executed in the state (in other words, data in the ring buffer area 17 is consumed), the ring buffer area 17 enters a so-called underrun state, and there is the possibility that a reproduction image, reproduction music, or the like is interrupted. Consequently, to further store data, the program returns to the step S3 via the step S8 shown in FIG. 3.

On the other hand, when it is determined in step S45 that data of the amount equal to or larger than the specified value "t" has already been stored (YES in step S45), the reproduction flag which has been "off" is set to "on" (step S46), the process of reproducing stored data (for example, in the case of image information, the process of displaying the image information) is executed in a manner similar to the conventional technique (step S47), and the program moves to the step S8 shown in FIG. 3.

On the other hand, when the reproduction flag is "on" in the determination of the step S40 (that is, when the reproducing process is executed in the output unit 5 at present) (ON in step S40), in a manner similar to the above-described determination in the step S45, whether data of the amount equal to or larger than the specified value "t" is stored in the ring buffer area 17 at present is determined (step S41). When data of the amount equal to or larger than the specified value "t" has been stored (YES in step S41), in a manner similar to the step S47, a reproduction mode such as display speed of image data is set as a normal mode as that in the conventional technique (step S42). On the basis of the setting, the reproducing process is executed (step S44). After that, the program moves to the process of the step S8 shown in FIG. 3.

On the contrary, when it is determined in the step S41 that data of an amount equal to or larger than the specified value "t" has not been stored (NO in step S41), the data reproduction mode is changed according to the storage amount (step S43), the reproducing process is executed on the basis of the setting (step S44), and the program moves to the process of the step S8 shown in FIG. 3.

At the time of changing the setting of the reproduction mode in the step S43, when data of an amount equal to or larger than the specific value "t" has not been stored, the reproduction mode is set so as to decrease the speed of reducing the storage amount of the ring buffer area 17 by reducing the consumption amount of data in the reproducing process in the step S44 (that is, the consumption amount per unit time of data stored in the ring buffer area 17). Concretely, for example, an amount of reading data from the ring buffer area 17 per unit time is set to be decreased to about 4/5 at the maximum of the normal amount. More concretely, there may be a method of controlling a reading amount so as to read the same pack twice in cycles such as once per five packs. In this case, it is sufficient to set the cycle to zero when the relay function in the upper-order not N is not stopped, and to shorten the cycle as the storage amount in the ring buffer area 17 decreases.

The degree of reducing the amount of reading data from the ring buffer area 17 per unit time may be a degree at which the user does not visually recognize the reduction. The value of 4/5 can be changed at such a degree.

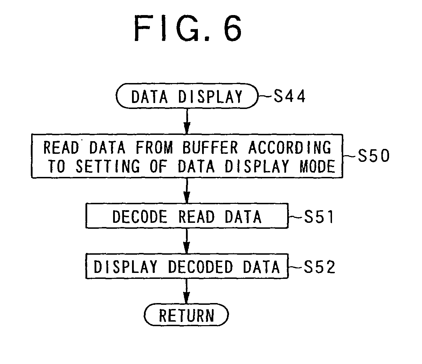

Next, the data display process in the step S44 shown in FIG. 5B will be concretely described by using the flowchart of FIG. 6. The data display process is based on the precondition that the setting of the speed of reading data from the ring buffer area 17 is changed in the process of the step S43.

As shown in FIG. 6, in the process of the step S44, first, data as image information is read from the ring buffer area 17 according to the reading amount (reading speed) per unit time which is set in the process of the step S43 (step S50). The read data is decoded in the output unit 5 (step S51) and the decoded data is displayed on a not-shown display or the like (step S52). Also in the case of sound information, data is read from the ring buffer area 17 at reading speed which is set in a manner similar to the case of image information (step S50). The read data is decoded and the decoded data is generated from a not-shown speaker or the like (steps S51 and S52).

Next, the series of network control processes will be more concretely described with reference to FIGS. 7A to 7C to FIGS. 13A to 13C including the flow of packets constructing data as contents.

In FIGS. 7A to 7C to FIGS. 12A to 12C, it is assumed that, in topology whose apex is a server S, two nodes N₁ and N₂ are connected at the first hierarchical level immediately lower than the server S. Two nodes N₃ and N₄ are connected immediately lower than the node N₁. Two nodes N₅ and N₆ are connected immediately lower than the node N₂. Two nodes N₇ and N₈, two nodes N₉ and N₁₀, two nodes N₁₁ and N₁₂, and two nodes N₁₃ and N₁₄ are connected immediately lower than the nodes N₃, N₄, N₅, and N₆, respectively. Processes performed in the case where, in the network system NS having the connection mode shown by the topology having the configuration, image data as contents pre-stored in the server S is distributed in packets to the lower-order nodes N₁ to N₁₄, and the node N₄ out of the nodes N₁ to N₁₄ exits from the network system NS will be described.

Further, it is assumed that each of the server S and the nodes N₁ to N₆ has the ring buffer area 17 and also performs a process of relaying the packets P to the other lower-order nodes (each having the ring buffer area 17) while storing the packets P as the data (refer to the steps S7 and S9 in FIG. 3). In FIGS. 7A to 7C to FIG. 13A to 13C, one packet P is expressed as one box (□), and the number in each of boxes indicates the packet number.

Further, in FIGS. 7A to 7C to FIGS. 12A to 12C, the ring buffer area 17 in each of the nodes N₁ to N₁₄ is expressed in a row. However, in the packet input/output process, the right and left ends of each of the ring buffer areas 17 are connected in a ring shape. One packet is provided for the reproducing process. Each time a packet is distributed to the immediately lower-order node N, the oldest packet in packets stored in the ring buffer area 17 is replaced with the new packet distributed from the immediately upper-order node N. In such a manner, the above-described FIFO buffer memory is realized.

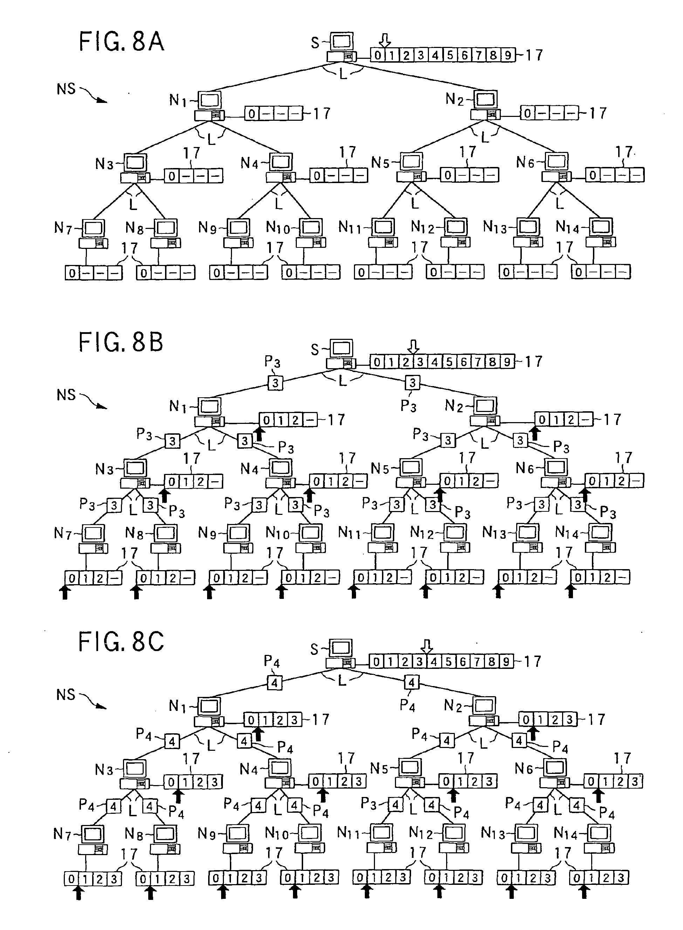

A downward hollow arrow displayed for the ring buffer area 17 in the server S in FIGS. 7A to 7C to FIGS. 13A to 13C indicates a timing when a packet expressed by a box whose left end is pointed by the arrow is transmitted from the server S. An upward solid arrow displayed for the ring buffer area 17 in each of the nodes N in FIGS. 8A to 8C to FIGS. 13A to 13C indicates that image data stored in the position pointed by the arrow in each packet is displayed at that time. Further, "-" displayed in the display (box) of a packet in the ring buffer area 17 in any of the server S and the nodes N indicates that no data is stored in the ring buffer area 17 corresponding to the packet.

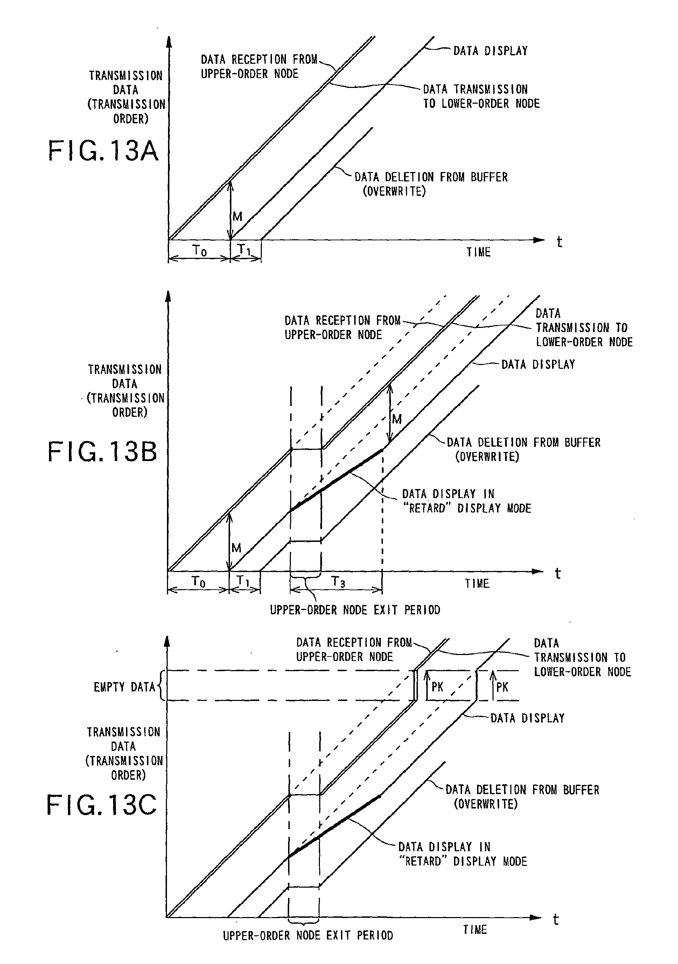

It is now assumed that, in each of the examples shown in FIGS. 7A and 7B to FIGS. 13A and 13B, the specified value "t" in each node N (specifically, the lower limit value "t" of an insufficient storage amount in the ring buffer area 17) corresponds to three packets.

First, before distribution of packets, packets to be distributed are stored in order of distribution in the ring buffer area 17 as shown in FIG. 7A. The packets are to be distributed to the nodes N₁ to N₁₄ connected at the lower levels in accordance with the numbers. Specifically, as shown in FIG. 7A, at the timing a packet Po is output from the server S, the packet Po (having the packet number of "0") is transmitted onto the lines L connecting the server S and the nodes N₁ and N₂. After that, the transmitted packet Po is stored in the ring buffer area 17 in each of nodes N while being relayed by the nodes N at the lower hierarchical levels with lapse of time as shown in FIGS. 7B and 7C.

When the packet Po is distributed to the nodes N₇ to N₁₄ connected at the bottom of the network system NS, next, transmission of a packet P to be distributed after the packet Po starts as shown in FIG. 8A.

For example, when image data of three packets is stored in the nodes N₇ to N₁₄ connected at the bottom of the network system NS as shown in FIG. 8B by repeating the above operations, the image reproducing process in the nodes N₁ to N₁₄ is started from the image data in the packet P₀.

After completion of the reproducing process of one packet using the packet Po in each of the nodes N₁ to N₁₄ as shown in FIG. 8C, the reproducing process using the next packet P₁ is started in the nodes N₁ to N₁₄, and the fourth packet P₄ from the server S is distributed.

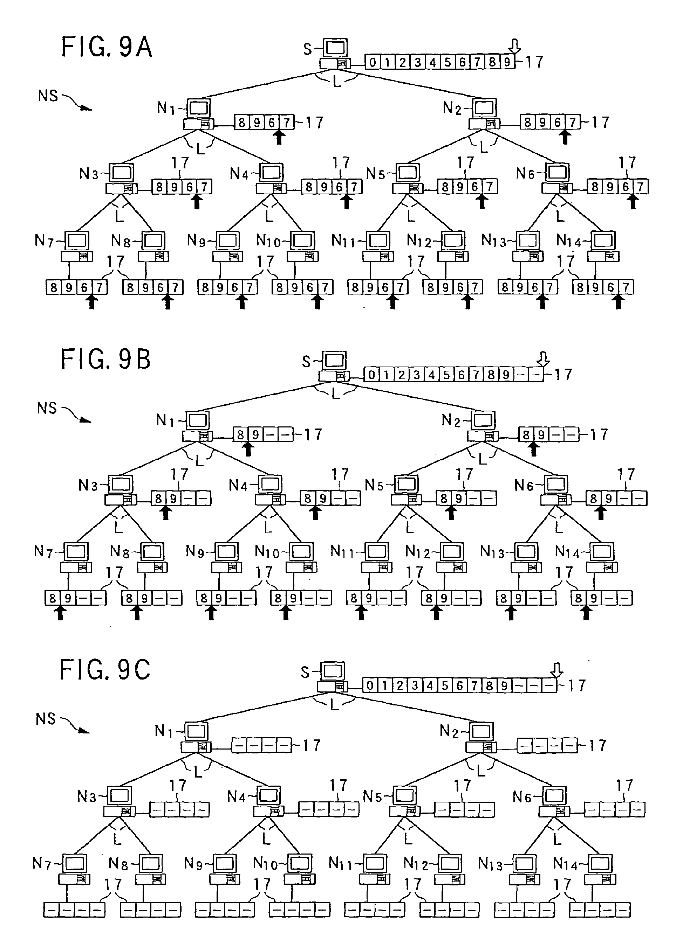

By repeating the above processes, packets as image data are sequentially distributed and are reproduced while being stored (and erased) in (from) the ring buffer area 17 in the FIFO manner. It is assumed that, in each of the nodes N₁ to N₁₄ in the first embodiment, as shown in FIG. 9A, packets stored before one packet immediately preceding to a packet being presently reproduced are sequentially updated.

As shown in FIGS. 9B and 9C, after all of packets to be distributed in the server S are distributed, the ring buffer areas 17 in the nodes N₁ to N₁₄ sequentially become empty, and all of the distributing processes in the network system NS are finished.

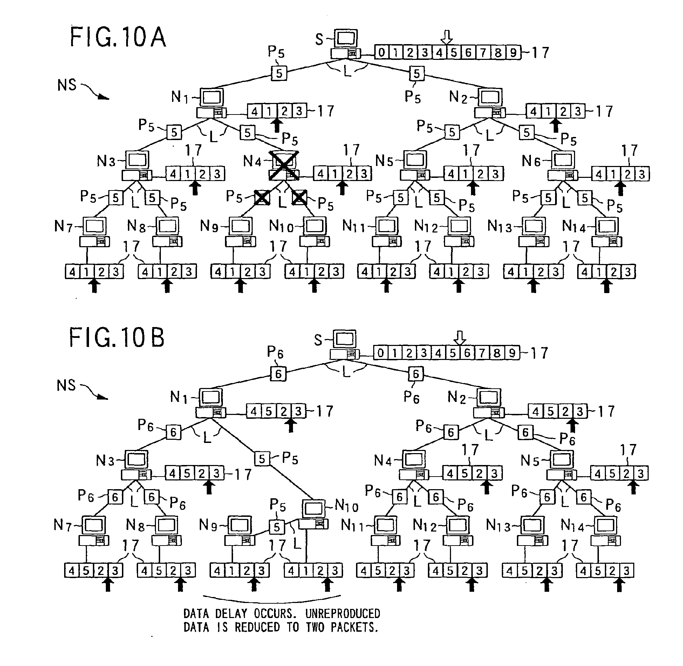

Next, processes performed in the case where the node N₄ in the network system NS stops its relaying function due to, for example, turn-off of its power, and exits from the network system NS itself will be described with reference to FIGS. 10A and 10B to FIGS. 13A to 13C.

As shown in FIG. 10A, it is assumed that, when the process of reproducing image data included in, for example, the packet P₁ is finished and, simultaneously, the packet P₅ is transmitted from the server S in each of the nodes N₁ to N₁₄, the node N₄ exits from the network system NS for a reason as described above (refer to FIG. 4D). After the exit, naturally, distribution of the packet P₅ to the lower-order nodes N₉ and N₁₀ is disconnected. In this case, as shown in FIG. 10B, a process of re-connecting the node N₁₀ to the node N₁ as a upper-order node N at present and a process of re-connecting the node N₉ to the reconnected node N₁₀ are executed (refer to step S1 in FIG. 4D), and the packet P₅ which was not distributed at the immediately preceding distribution timing is redistributed. As a result, in the ring buffer area 17 included in each of the nodes N₉ and N₁₀, the rewriting timing is delayed only by one packet as compared with the other nodes N₁ to N₈ and the nodes N₁₁ to N₁₄. Consequently, there are only two packets (the packets P₃ and P₄) which are not yet subjected to the reproducing process as shown in FIG. 10B and so-called data delay occurs (NO in step S41 in FIG. 5B). After that, until distribution of all of the packets completes, a state that reproduction in the nodes N₉ to N₁₀ delays from the other nodes N₁ to N₈ and the nodes N₁₁ to N₁₄ only by one packet continues in the nodes N₉ and N₁₀.

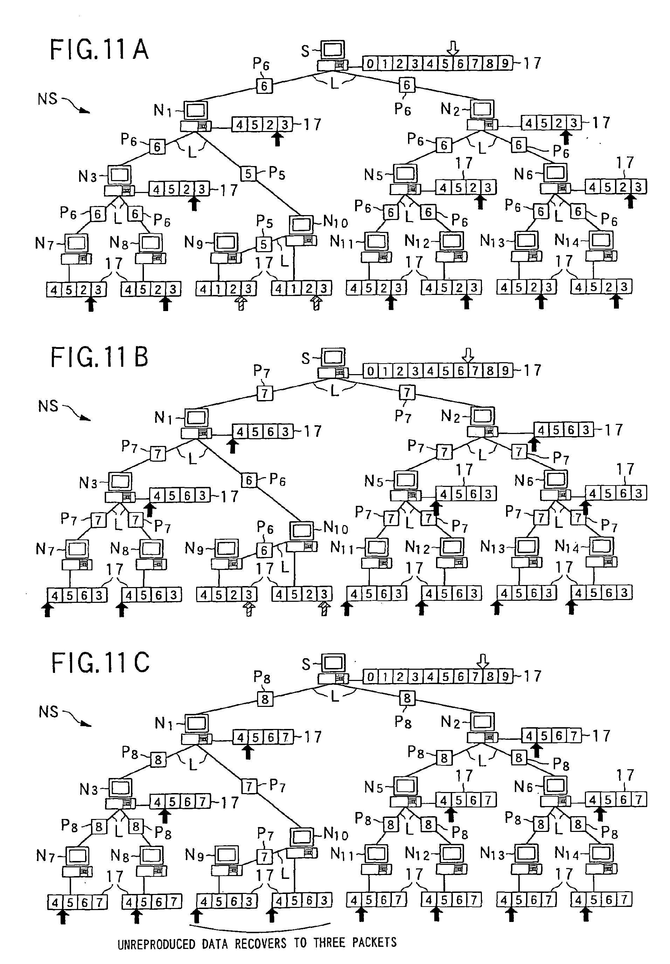

In the first embodiment, therefore, as shown by hatched arrows in FIGS. 11A and 11B, in the nodes N₉ and N₁₀, the speed of reading data from the ring buffer area 17 is made slower than that in the other nodes N₁ to N₈ and the nodes N₁₁ to N₁₄ after the timing at which the data delay occurs (NO in step S41 in FIG. 5B and step S50 in FIG. 6). Finally, as shown in FIG. 11C, the number of packets to be subjected to the reproducing process is recovered to three as the specified value (in the case of FIG. 11C, the packets P₄ to P₆).

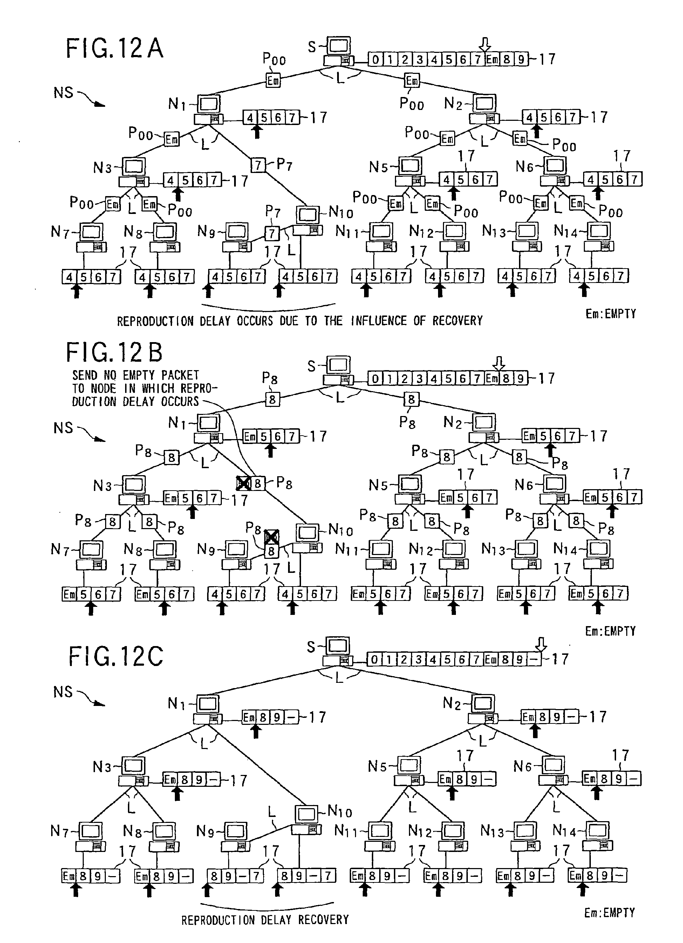

As obvious from comparison between, for example, the state of the ring buffer area 17 in the node N₉ and the ring buffer area 17 in the node N₈ in FIG. 11C or 12A, the number of packets which are not reproduced in each of the ring buffer areas 17 is recovered to three. The packet to be reproduced in the node N₈ is the packet P₅ but that in the node N₉ is the packet P₄. Due to exit of the immediately upper-order node N₄ from the network system NS, so-called reproduction delay (that is, deviation of timings of reproducing the same contents among nodes N) occurs in the nodes N₉ and N₁₀ below the node N₄ when the reproduction timings on the time base of a series of packets P are compared. Therefore, for example, in the case where the user of the node N₉ and the user of the node N₈ play a so-called network game, the occurrence of reproduction delay in both of them disturbs the normal use state of the nodes N.

Consequently, in the network control process of the first embodiment, the empty packet is distributed from the server S to all of the nodes N belonging to the network system NS except for the nodes N in which the reproduction delay occurs due to the exit of the upper-order node N from the network system NS, thereby making contents reproduction timings in all of nodes N included in the network system NS synchronize with each other.

In the first embodiment, as shown in FIG. 12A, in the contents before distribution which is stored in the ring buffer area 17 in the server S, empty packets P₀₀ are inserted in other packets at predetermined timings or intervals in anticipation of occurrence of future reproduction delay.

As shown in FIGS. 12A and 12B, in the case where the reproduction delay occurs in, for example, the nodes N₉ and N₁₀, the empty packets are distributed to all of the nodes except for the nodes N₉ and N₁₀, that is, the nodes N₁ to N₈ and the nodes N₁₁ to N₁₄ (refer to FIG. 5A). As a result, the timings of reproducing distributed packets in all of the nodes N₁ to N₁₄ included in the network system NS become the same as shown in FIG. 12C, and the reproduction delay among the nodes N₁ to N₁₄ is eliminated.

Changes with time in transmission/reception of packets among the nodes N connected immediately above and below the nodes N₉ and N₁₀, accompanying execution of the series of network control processes will be described concretely with reference to FIGS. 13A to 13C. FIGS. 13A to 13C show states of transmission/reception of packets among the nodes N connected immediately above and below the nodes N₉ and N₁₀ when the axis of abscissa denotes time in the distribution using its the left end as contents distribution start time and the axis of ordinate denotes the pack numbers in a packet distributed (specifically, the lower end of the axis of ordinate corresponding to a pack having the pack number "0" in a packet P₀).

In the case where the relay function of the node N₄ connected to the immediately upper-order node functions normally in FIGS. 7A to 7C to FIGS. 12A to 12C, the node N₉ or N₁₀ repeats an operation of relaying a packet from the immediately upper-order node N₄ to the immediately lower-order node while receiving the packet from the node N₄. Although the immediately lower-order node N is not connected to the node N₉ or N₁₀ in FIGS. 7A to 7C to FIGS. 12A to 12C, to generally explain the function of each of the nodes N included in the network system NS, it is assumed that another node N is connected immediately below the node N₉ or N₁₀ in FIGS. 13A to 13C.

In parallel with the relaying function, the node N₉ or N₁₀ stores the packets P distributed from the node N₄ into the ring buffer area 17 in the distribution order (refer to FIGS. 8A to 8C and FIGS. 9A to 9C). The node N₉ or N₁₀ executes processes such as decoding and displaying of data stored in the packet P by the output unit 5 (hereinbelow, the processes including a display process when the data is image data and a sound outputting process when the data is sound data) at a timing when three packets P are stored. In the example shown in FIG. 13A, time when the first packet Po illustrated in FIGS. 7A to 7C to FIGS. 12A to 12C is distributed from the server S via the node N₄ and stored in the ring buffer area 17 in the node N₉ or N₁₀ corresponds to the left end of the axis of abscissa. From the time at the left end, subsequent packets P₁ and P₂ are similarly distributed and stored in the ring buffer area 17. The period since the time until time when decoding, displaying, and the like of the data stored in the packet Po starts is time To shown in FIG. 13A. The storage amount in the ring buffer area 17 (the amount of three packets in the first embodiment) corresponds to an amount indicated by reference character "M" in FIGS. 13A and 13B.

After the process of decoding, displaying, and the like on data in each packet P is finished, the portion in the ring buffer area 17 in which the packet P has been recorded is overwritten with the subsequent packet P distributed after the packet. In the example shown in FIG. 12A, time T is necessary since the process of decoding, displaying, and the like on data in the packet Po starts until data in the subsequent packet P₄ is stored (overwritten) in the portion in the ring buffer area 17 in which the packet P₀ has been stored.

Next, as described above by referring to FIGS. 10A and 10B, in the case where the node N₄ immediately above the nodes N₉ and N₁₀ exits from the network system NS and its relay function stops, for the period since the stop until reconfiguration of the topology shown in FIG. 10B completes and distribution of the packet P restarts, no packet P is distributed to the nodes N₉ and N₁₀. Therefore, in the non-distribution period, although time elapses, no packets P are distributed from the upper-order node N. In the nodes N₉ and N₁₀, as shown in FIG. 13B, graphs showing a distribution state of the packet P from the upper-order node and a relay state of the packet P to the lower-order node include a flat portion corresponding to the non-distribution period. As a result, the storage amount in the ring buffer area 17 decreases. The gradients of graphs before and after the non-distribution period (that is, the distribution speed and relay speed of the packet P) are the same.

Next, in the case where there is the non-distribution period, in the first embodiment, the speed of reading data from the ring buffer area 17 is decreased and occurrence of underflow in the ring buffer area 17 is prevented (refer to steps S43 and S44 in FIG. 5B). Therefore, from the timing when the non-distribution period starts, the speed of decoding, displaying, and the like of data decreases as shown by the thick solid line in FIG. 13B. When the storage amount in the ring buffer area 17 becomes three packets or more, the speed of decoding, displaying, and the like is reset to the original speed as shown in FIG. 13B. The storage amount in the ring buffer area 17 is "M" at the beginning of distribution in a manner similar to the case shown in FIG. 13A and becomes temporarily smaller than "M" due to occurrence of the non-distribution period. However, the speed of reading data from the ring buffer area 17 becomes slower, so that the storage amount becomes again the original storage amount "M" after lapse of the time T3 in which the data reading speed is slow.

In FIG. 13B, in the non-distribution period, the overwriting process in the ring buffer area 17 stops.

As shown in FIGS. 12A to 12C, after exit of the node N₄, the reproduction delay occurs in the nodes N₉ and N₁₀ different from the other nodes N₁ to N₈ and the nodes N₁₁ to N₁₄. In the first embodiment, as shown in FIGS. 12A to 12C, the packets P₀₀ are mixed in the contents in advance and distributed only to the other nodes N₁ to N₈ and the nodes N₁₁ to N₁₄.

Therefore, when the situation is seen from the positions of the nodes N₉ and N₁₀, as shown in FIG. 13C, at the timings when the empty packet P₀₀ is distributed to the other nodes N₁ to N₈ and the other nodes N₁₁ to N₁₄ (shown as "empty data" in FIG. 13C), the contents is distributed by passing the empty packet P₀₀ as described in the step S37 in FIG. 5A. Consequently, continuity of pack numbers in the nodes N₉ and N₁₀ in the case of seeing the continuous contents stored in the original server S is interrupted. As a result, pack numbers of the amount corresponding to the empty packets P₀₀ (indicated by reference characters "PK" in FIG. 13C) are passed to increase the distribution amount at the distribution timing of the empty packet P₀₀ as shown in FIG. 13C, and similarly relayed to the lower-order nodes N. Accordingly, numbers of packs provided for the process of decoding, displaying and the like are similarly passed and change in an increased state.

As described above, in the network control process according to the first embodiment, when the relay function in a node N at the upper-order side stops in the network system NS, the speed of consuming contents data stored in a lower-order node N is controlled to be slower than that before the stop. Consequently, while distribution of contents data is interrupted, occurrence of interruption of the process or extreme process delay in the lower-order node N caused by consumption of contents data at speed similar to that before the stop can be prevented without placing burden on the network system NS itself.

Therefore, even in the case where the relay function stops in any of the nodes N included in the network system NS, the stopped relay function can be restarted without exerting a large influence on the process in the lower-order node N. Thus, contents data can be distributed reliably while improving the reliability of the network system NS itself.

Since contents data is image data and the contents data consumption speed is lowered by making the decreasing speed of the image data storage amount in the ring buffer area 17 lower than the decreasing speed before the relay function stops, the consumption speed can be reduced with a simple configuration without performing complicated speed control process.

Further, by repeatedly outputting the same still image that forms moving picture data a plurality of times, the decreasing speed of the storage amount in the ring buffer area 17 is reduced, so that the consumption speed can be reduced reliably by the simple process.

Further, when stop of the relay function is detected, the consumption speed is controlled to 4/5 of the consumption speed before the relay function stops at the maximum, so that the consumption speed can be reduced without exerting a large influence on the process in the node N. The decreasing amount of the consumption speed is not limited to about the 4/5 but may be finally a reading speed decreasing amount which cannot be perceived by audience (the user of the node N).

Since the empty packet P₀₀ is distributed after the relay function is reset to all of the nodes N except for the nodes N which are below the node N whose relay function stops before the relay function stops, delay gradually occurs on the reproduction time base in the other nodes N. As a result, the shift in the reproduction position on the reproduction time base, which occurs between the node and all of the other nodes N due to decrease in the unit time consumption time in the nodes N below the node N whose relay function stops, can be eliminated.

### II. Modification of First Embodiment

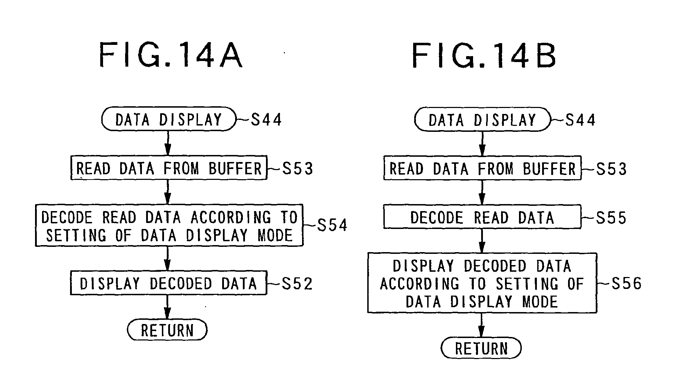

A modification of the first embodiment will now be described with reference to FIGS. 14A and 14B.

In the foregoing first embodiment, as a method of reducing the speed of consuming data stored in the ring buffer area 17, the method of reducing the speed of reading data from the ring buffer area 17 itself is used. Except for the method, the following two methods can be employed as the method of reducing the consumption speed.

As a first modification, not the speed of reading data from the ring buffer area 17 itself but decoding speed in the output unit 5 of data read from the ring buffer are 17 may be reduced. More specifically, in the process of the step S43 in FIG. 5B, the data decoding speed in the output unit 5 is set to be reduced to about 4/5 of the speed in the normal state at the maximum. For example, it is sufficient to set the frame rate at the time of decoding of still picture data that forms moving picture data to 30 frames per second when the relay function in the upper-order node N does not stop and to set the frame rate to 29 frames per second when the storage amount in the ring buffer area 17 decreases. The more the storage amount in the ring buffer area 17 decreases, the lower the frame rate is set.

In the case where the frame rate is changed in the process of the step S43, as the process in step S44 executed subsequently, as shown in FIG. 14A, first, data as image information is read from the ring buffer area 17 at normal reading speed (step S53). The read data is decoded in the output unit 5 by using the frame rate set in the step S43 (step S54), and the decoded data is displayed on a not-shown display or the like (step S52). Also in the case of sound information, data is read from the ring buffer area 17 at reading speed similar to that in the case of the image information (step S53), the read data is decoded at the set frame rate, and the decoded data is generated from a not-shown speaker or the like (steps S54 and S52).

As described above, according to the first modification, the data consumption speed in the ring buffer area 17 is reduced by making the data decoding speed in the process in the node N slower than the decoding speed before the relay function stops. Thus, the consumption speed can be reduced reliably by the simple process.

Next, as a second embodiment, in the case where contents data is moving picture data, not the reading speed from the ring buffer area 17 itself and the decoding speed in the output unit 5 but display speed in the output unit 5 of the decoded data may be reduced. More concretely, in the process of the step S43 in FIG. 5B, display time of each of a plurality of pieces of still picture data that forms moving picture data decoded in the output unit 5 is increased to about 5/4 of display time in the normal state at the maximum. Specifically, it is sufficient to set the display time of still picture data corresponding to one still picture (that is, display time per still picture) to 1/30 second when the relay function in the upper-order function in the upper-order node N does not stop, and to set the display time to 1/29 second when the storage amount in the ring buffer area 17 decreases. It is sufficient to change the display time to be longer as the storage amount in the ring buffer area 17 decreases.

In the case of changing the display time as described above in the process of the step S43, as a process in step S44 executed subsequently, as shown in FIG. 14B, data as image information is read from the ring buffer area 17 at normal reading speed (step S53). The read data is decoded in the output unit 5 by using normal frame rate (step S55). After that, the decoded data is displayed on a not-shown display or the like with the display time per still picture which is set in the step S43 (step S56).

As described above, according to the second modification, the consumption speed in the ring buffer area 17 is reduced by making the display time of a still picture corresponding to still picture data that forms moving picture data longer than display time before stop of the relay function. Thus, the consumption speed can be reduced more reliably by simple process.

It is also possible to record a program corresponding to the flowcharts of FIGS. 3 to 6 and FIG. 14 on an information recording medium such as a flexible disk or a hard disk or obtain the program via the Internet or the like and record it, and read and execute the program by a general computer, thereby making the computer function as the CPU 1 according to the first embodiment.

### (III) Second Embodiment

### (A) Embodiment

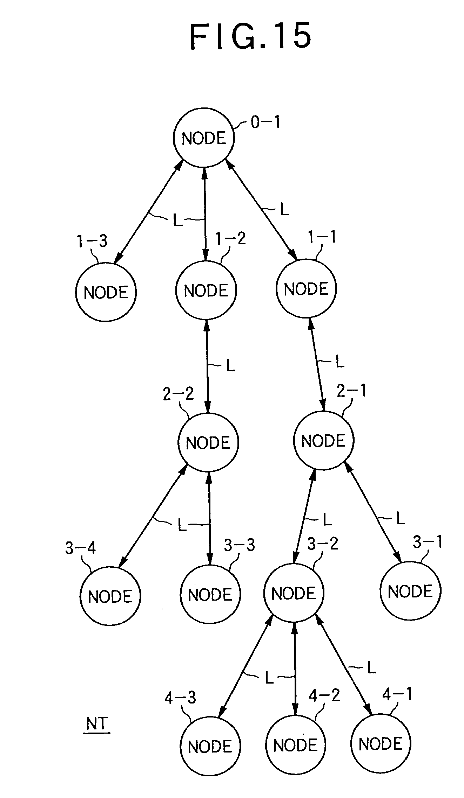

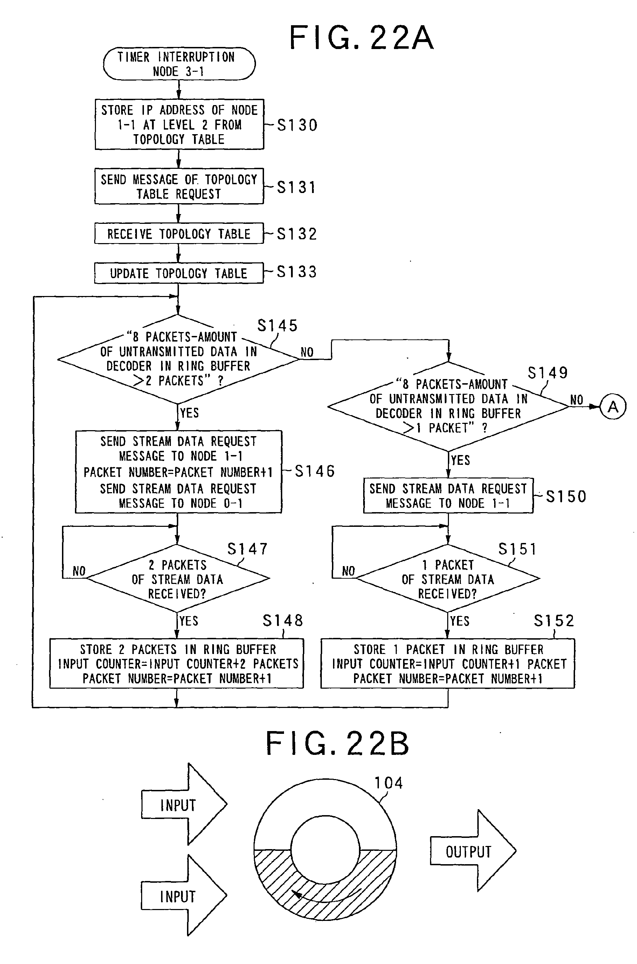

A second embodiment according to the present invention will be described first with reference to FIG. 15 to FIGS. 22A and 22B.

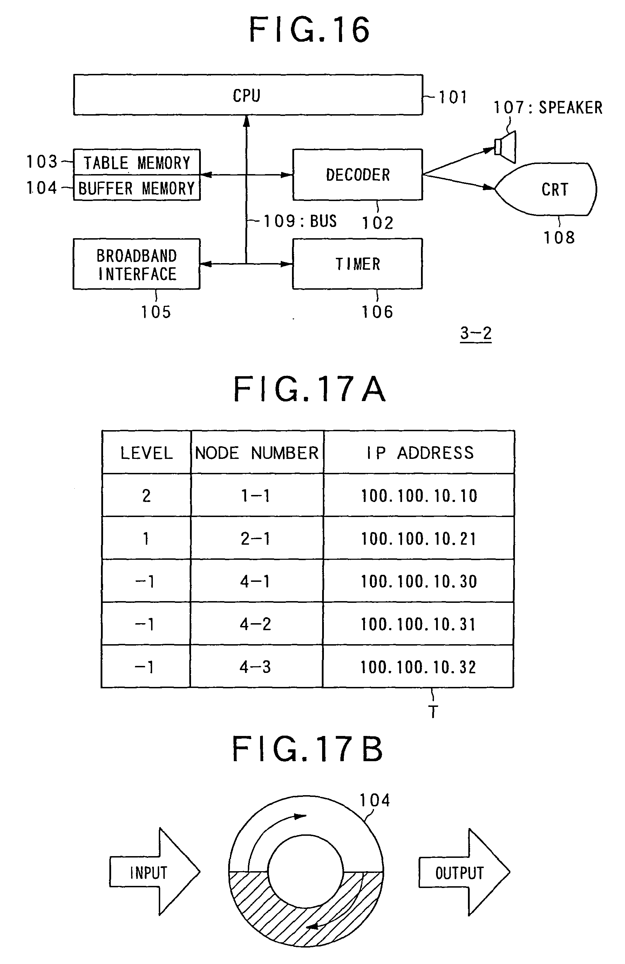

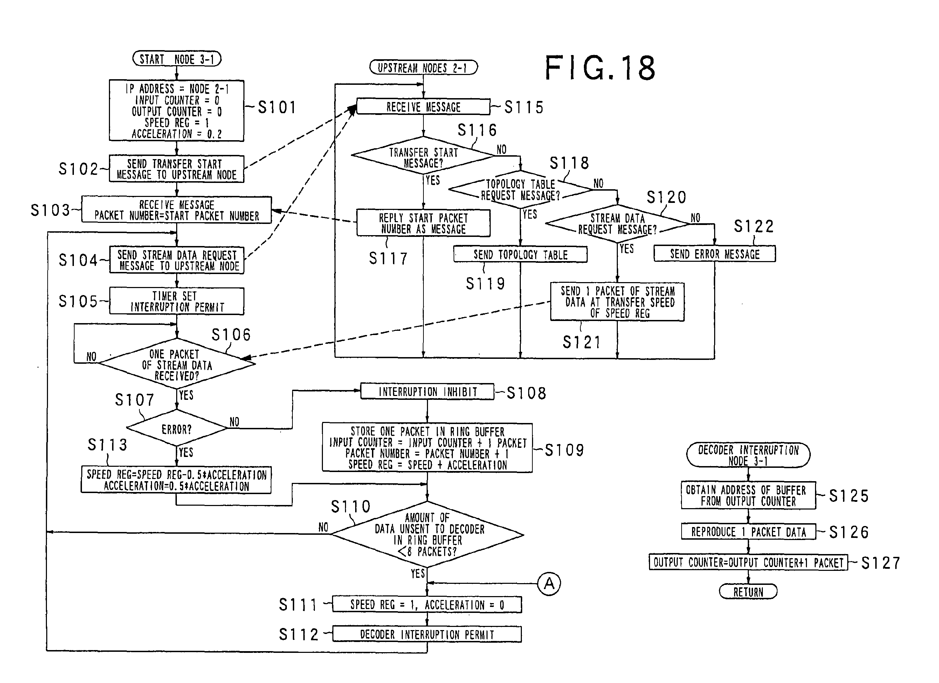

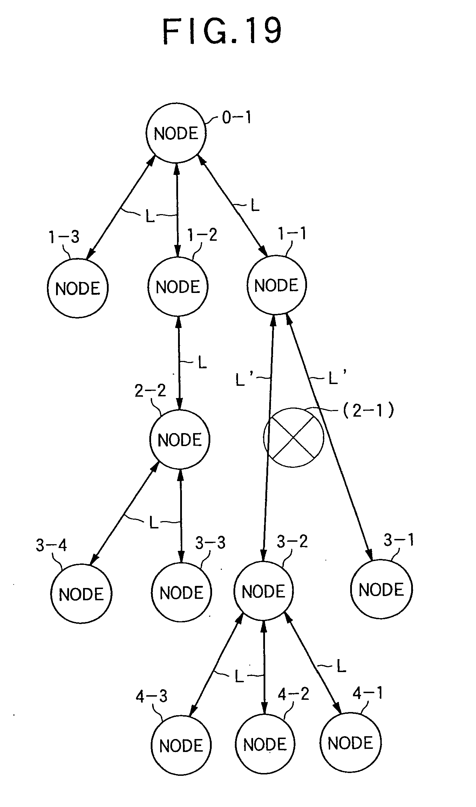

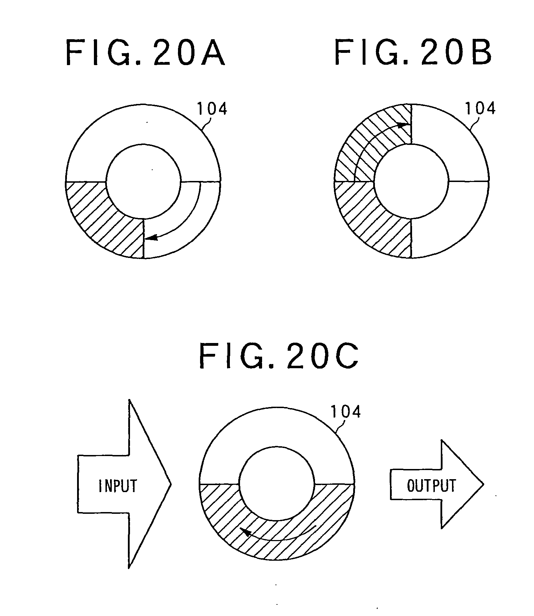

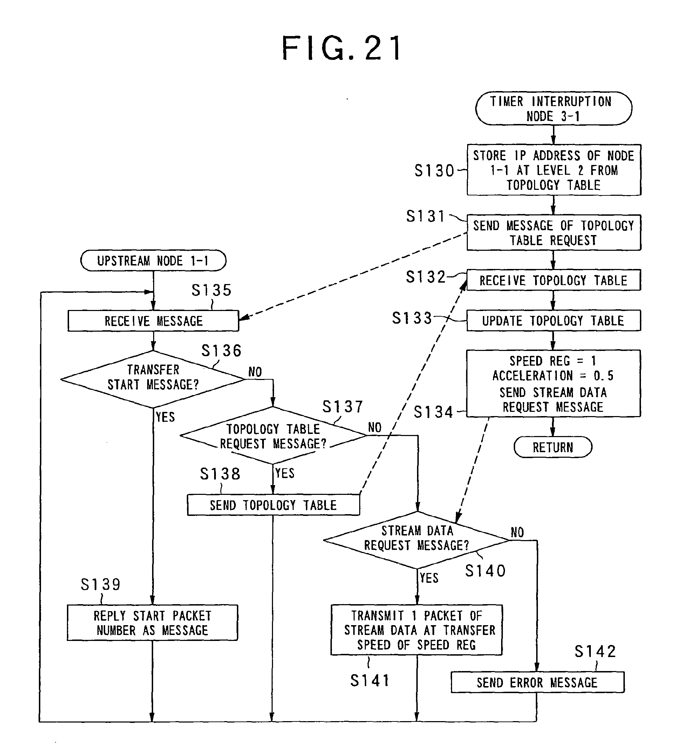

FIG. 15 is a block diagram showing a schematic configuration of a network system according to a second embodiment. FIG. 16 is a block diagram showing a general configuration of a node included in the network system. FIGS. 17A and 17B are diagrams showing a detailed configuration of the node. FIG. 18 is a flowchart showing normal distributing operation in the network system. FIG. 19 is a block diagram showing a schematic configuration of the network system after the relay function in part of the nodes stops. FIGS. 20A, 20B, and 20C are a flowchart showing operations in a lower-order node when the relay function stops. FIG. 21 is a diagram showing operations of a lower-order node when the relay function stops. FIGS. 22A and 22B are diagrams showing operation in a network system according to a modification of the second embodiment.

As shown in FIG. 15, a network system NT according to the second embodiment is formed by a tree structure using a node 0-1 as a distributing apparatus as the apex. The network system NT includes nodes 1-1, 1-2, and 1-3 as nodes constructing the first hierarchical level, nodes 2-1 and 2-2 as nodes constructing the second hierarchical level, nodes 3-1, 3-2, 3-3, and 3-4 as nodes constructing the third hierarchical level and, further, nodes 4-1, 4-2, and 4-3 as nodes constructing the fourth hierarchical level. The nodes are connected to each other via lines L as wire circuits or wireless circuits so as to be able to transmit/receive information to/from each other using the node 0-1 as the apex. As concrete examples of the nodes, the node 0-1 at the highest order corresponds to, for example, as server as a contents distribution source, and all of the nodes other than the node 0-1 are, for example, personal computers in houses. The node may be a set top box or a router in a house.

In the network system NT shown in FIG. 15, contents distributed from the node 0-1 and desired by the user of a node is distributed via other nodes included in the hierarchical levels higher than the node via the lines L. Obviously, the contents is distributed in a digitized state in units of so-called packets. Further, packets to which sequential packet numbers indicative of the order of reproduction or storage to the buffer memory 104 (refer to FIG. 16) or the like are assigned are distributed.

A concrete configuration of each node will be described with reference to FIG. 16 and FIGS. 17A and 17B. In the following, the detailed configuration of the node 3-2 in the network system NT shown in FIG. 15 will be described. The detailed configuration of each of the other nodes is the same as that of the node 3-2.

As shown in FIG. 16, the node 3-2 has a CPU 100 as a retrieval means, connection means, distribution relay means, a distribution control means, and switching means, a decoder 102, a table memory 103, a buffer memory 104, a broadband interface 105, a timer 106, a speaker 107, and a CRT (Cathode Ray Tube) 108 as display means. The CPU 100, decoder 102, table memory 103, buffer memory 104, broadband interface 105, and timer 106 are connected to each other via a bus 109.

Next, the operation will be described.
The broadband interface 105 is directly connected to the line L. As shown in FIG. 15, the broadband interface 105 in the node 3-2 is connected to the broadband interface 105 included in the node 2-1 at the immediately higher hierarchical level via the line L, and is also connected to the broadband interfaces 105 included in the nodes 4-1 to 4-3 at the immediately lower hierarchical level via the lines L. Transmission/reception of contents and transmission/reception of control information necessary for the contents transmission/reception can be performed on the packet unit basis among the nodes.

In the table memory 103 as a nonvolatile memory, a topology table T as shown in FIG. 17A is stored. In the topology table T, node numbers for identifying other nodes at the higher or lower hierarchical level in accordance with the position in the network system NT of the node including the table memory 103 in which the topology table T is stored, and IP (Internet Protocol) addresses in the network system N are included together with level information indicative of hierarchical levels. Since the topology table T illustrated in FIG. 17A corresponds to the node 3-2, it includes the level information of the node 1-1 at the hierarchical level (level 2) higher than the node 3-2 by two levels as shown in FIG. 15, the node number of the node 1-1, and the IP address (for example, "100.100.10.10") of the node 1-1.

Similarly, the topology table T includes: the level information of the node 2-1 at the hierarchical level (level 1) immediately higher than the node 3-2, the node number of the node 2-1, and the IP address (for example, "100.100.10.21") of the node 2-1; the level information of the node 4-1 at the hierarchical level (level -1) immediately lower than the node 3-2, the node number of the node 4-1, and the IP address (for example, "100.100.10.30") of the node 4-1; the level information of the node 4-2 at the hierarchical level (level -1) immediately lower than the node 3-2, the node number of the node 4-2, and the IP address (for example, "100.100.10.31") of the node 4-2; and the level information of the node 4-3 at the hierarchical level (level -1) immediately lower than the node 3-2, the node number of the node 4-3, and the IP address (for example, "100.100.10.32") of the node 4-3.

Referring again to FIG. 16, the buffer memory 104 as a volatile memory is a ring buffer memory of a so-called FIFO (First In First Out) form. The buffer memory 104 stores data corresponding to distributed contents in accordance with the distribution order only by a preset recording capacity, reads the data in accordance with the stored order under control of the CPU 100, and outputs the read data to the decoder 102 via the bus 109.

The operation of the buffer memory 104 in the case where the network system NT is in a normal state will be described with reference to FIG. 17B.

As described above, the buffer memory 104 is constructed in a ring shape. For example, as shown conceptually in the upper half of FIG. 17B, data of contents is input clockwise via the broadband interface 105 and, as shown conceptually in the lower half of FIG. 17B, the data is output clockwise to the decoder 102. In the example shown in FIG. 17B, data in the hatched part is contents data actually stored. In parallel with output of the data to the decoder 102 as shown by the arrow in the lower half of FIG. 17B, new data is input from the broadband interface 105 and stored as shown by the arrow in the upper half of FIG. 17B. In the normal state, a data input amount and a data output amount in the buffer memory 104 per unit time are the same, and the storage amount in the buffer memory 104 is maintained to be constant (more concretely, the storage amount of the half of the buffer memory 104).

On the other hand, when arrival time of a packet as the data fluctuates in the case such that the topology in the network system NT is changed, the fluctuation can be absorbed by the buffer memory 104. In the case where the decoder 102 decodes a predetermined amount of data in a lump or in the case where the topology is disconnected for some reason, the buffer memory 104 functions so as to always store a predetermined amount of data so that the buffer memory 104 does not become empty and the reproducing process in the decoder 102 is not interrupted.

Referring again to FIG. 16, the timer 106 performs counting for detecting that the relay function in any of the nodes in the network system NT stops as will be described later.

The decoder 102 decodes data of contents output from the buffer memory 104 via the bus 109, outputs an image in the data to the CRT 108 where the image is displayed, and outputs sound in the data via the speaker 107.

Next, a new node is connected to the network system NT. Operations started and executed in a normal state in which the new node is included and contents is distributed will be described in a lump by using FIG. 18. FIG. 18 is a flowchart showing an example of the case where the node 3-1 is newly connected to the node 2-1 in the network system NT so that the network system NT shown in FIG. 15 is obtained, and contents is distributed to the node 3-1. In the embodiment described below, it is assumed that the total storage capacity of the buffer memory 104 is 64 kilobytes which correspond to the data amount of 16 packets.

When the node 3-1 newly enters the network system NT by being physically connected to the node 2-1, first, the CPU 100 in the node 3-1 sets the buffer memory 104 (hereinbelow, in each of the drawings, the buffer memory 104 itself will be properly called "ring buffer") in the node 3-1. The CPU 100 in the node 3 sets a speed parameter (in the diagrams, shown as "speed Reg") indicative of reproduction speed in the decoder 102 to the same as normal reproduction speed, and sets the IP address of a node as the data supply source into the node 2-1 at the immediately high order (the IP address of the node 2-1 is obtained by the node 3-1 when the node 3-1 is connected to the node 2-1). To calculate an address for storing data in the buffer memory 104, the CPU 100 initializes each of an input counter (16 bits) for counting the number of bytes of input data distributed from the node 2-1 and an output counter (16 bits) indicative of an amount of data reproduced by the decoder 102 to "zero" (step S101).

The address for storing data input to the buffer memory 104 is "the head address in the buffer memory 104 and the value of the input counter", and the address for reading data to the decoder 102 is "the head address of the buffer memory 104 + the value of the output counter".

After completion of the necessary initializing process, next, the CPU 100 in the node 3-1 transmits a start message requesting for start of contents data transfer to the data node 2-1 with reference to the topology table T in the table memory 3 (step S102).

Next, the CPU 1 in the node 2-1 what receives the start message (S115) determines whether the received message is a start message or not (step S116). Since the message presently received is the start message (Y in step S116), the CPU 1 returns the packet number of data presently reproduced by the node 2-1 as start packet number to the node 3-1 (step S117).

When the node 3-1 obtains the start packet number from the node 2-1, the node 3-1 stores it into the area of the corresponding packet number on the buffer memory 104 (step S103) and transmits a data request message requesting for actual contents data to the node 2-1 (step S104). The data request message includes information indicative of the packet number of data to be transmitted to the node 3-1 and distribution speed (the parameter "speed Reg" in the node 2-1).

The node 2-1 which has received the data request message (step S115) determines again whether the received message is a start message or not (step S116). Since the message presently received is the data request message (N in step S116), the node 2-1 determines whether the received message is a message that requests for the topology table T or not (step S118).

The determining operation in the step S118 (and process of transmitting the topology table T from the node 2-1 in the case where "Y" in the step S118) is executed in preparation for the case where when the relay function in any of the nodes in the network system NT stops, another node connected below the node whose relay function stops obtains the topology of the network system NT. The operation is a process which is meaningless in the processes between the present node 3-1 and the node 2-1 (therefore, the process of transmitting the topology table T from the node 2-1 (step S119) is not naturally execute).

Since the message presently received is the data request message but is not the topology request message in the determination of step S118 (N in step S118), next, whether the received message is the data request message or not is determined (step S120). Since the message presently received is the data request message (Y in step S120), data of one packet is transmitted to the node 3-1 (via the line L) at the reproduction speed designated in the data request message (1X at present) (step S121). When it is determined in the step S120 that the message received from the node 3-1 at that time is not any of the start message, the topology table request message, and the data request message (N in step S120), a preset error message is sent back to the node 3-1 (step S122).

In parallel with the operations, the node 3-1 is set so as to start counting in the timer 106 in the node 3-1 simultaneously with outputting of the data request message and, when the counting becomes "0", generate a timer interrupt instruction (step S105). The node 3-1 waits until predetermined time elapses in the counting of the timer 106 (step S106). When data from the node 2-1 does not arrive within the predetermined time (N in step S106), the timer interrupt instruction is executed, and the connecting process is performed again on the node 2-1.

On the other hand, when data from the node 2-1 arrives within the predetermined time (Y in step S106), whether the arrived data has been transmitted correctly or not is determined (step S107). If the data has been transmitted correctly (Y in step S107), execution of the timer interrupt instruction is inhibited (step S108), and an amount of one packet of the received data is stored in the buffer memory 104. In association with the operation, the values of the input counter and the number of packets stored in the buffer memory 104 are updated only by one packet and, further, the speed parameter is increased only by the amount of present acceleration (which is set in the initializing process in the step S101) (step S109).

Whether the amount of data which is stored in the buffer memory 104 and is not output to the decoder 102 has become eight packets (that is, the storage amount of the half of the buffer memory 104) or not is determined (step S110). When the amount is less than eight packets (Y in step S110), the node 3-1 returns to the step S104 to receive the next packet and repeats the above-described processes. On the other hand, when the data amount stored in the buffer memory 104 becomes eight packets (N in step S110), resets the speed parameter and the acceleration to the initial values (step S111), starts outputting data to the decoder 102 (step S112), and returns to the process in the step S104 so as to continuously receive the subsequent data from the node 2-1.

By repeating the processes in the steps S104 to S110, the speed of distribution from the node 2-1 increases by the acceleration at that time (the initial value of 0.2 time) until data of an amount corresponding to eight packets is stored in the buffer memory 104, and the buffer memory 104 is charged at high speed until reception of data becomes an error (Y in step S107). On the other had, when an error occurs in reception of data (Y in step S107), the distribution speed after that is decreased only by 0.5 time of the acceleration (step S113) to make data transmission reliably and then distribution is continued.

In the process of the step S112, when data of the amount of eight packets is stored in the buffer memory 104 and the data is output to the decoder 102, the decoder 102 obtains the address of the data output from the buffer memory 104 on the basis of the value of the output counter in the buffer memory 104 at that time (step S125), decodes and reproduces the data only by one packet (step S126), and increments the value of the output counter in the buffer memory 104 only by one packet (step S127). The processes are repeated only by the amount of eight packets, thereby performing the data reproducing process.

By executing the data distribution from the node 2-1 and the reproducing process in the node 3-1 as described above, the data reproducing process in the node 3-1 is executed while maintaining the data amount in the buffer memory 104 to be constant.

Next, processes performed in the case where the contents relay function in the node 2-1 stops for a reason such that the power switch is turned off in the network system NT shown in FIG. 15 will be concretely described with reference to FIGS. 19 to 21.

In the network system NT according to the second embodiment, when the relay function in the node 2-1 stops for the above-described reason, as shown in FIG. 19, the nodes 3-1 and 3-2 connected to the original node 2-1 automatically execute topology reconstructing operation of connecting themselves to the node 1-1 at the immediately higher hierarchical level of the node 2-1 via lines L', and continue distribution of contents.

First, the general operation in the nodes 3-1 and 3-2 in the case where the relay function in the node 2-1 stops as shown in FIG. 19 will be described.

When the relay function in the node 2-1 stops as shown in FIG. 19, the CPU 100 in each of the nodes 3-1 and 3-2 at the immediately lower hierarchical level (since distribution in the normal state continues, the processes described with reference to FIG. 18 are repeated) cannot receive data from the node 2-1 even after predetermined time elapses in the process of the step S106 shown in FIG. 18. When data cannot be received even after lapse of the predetermined time (N in step S106), the CPU 100 in each of the nodes 3-1 and 3-2 recognizes that the relay function in the node 2-1 at the immediately higher hierarchical level stops and the topology is disconnected.

After that, on recognition of disconnection of the topology, with reference to the topology table T stored in the table memory 103, the topology is reconfigured so that the nodes 3-1 and 3-2 are connected to the node 1-1 at the level higher by two levels via the newly formed lines L'. The node 2-1 is deleted from the topology table T in the table memory 103 in each of the nodes 3-1 and 3-2 and, simultaneously, the level information of the node 1-1 is updated to "1". After that, each of the nodes 3-1 and 3-2 transmits the topology request message (refer to the steps S118 and S119 in FIG. 18) to the node 1-1, and obtains the new topology table T from the node 1-1. On the basis of the obtained topology table T, it is recognized that the node at the immediately higher hierarchical level of the node 1-1 is the node 0-1 and, simultaneously, the IP address and the node number of the node 0-1 whose level information is "2" are added to the topology table T (in each of the nodes 3-1 and 3-2), thereby completing reconfiguration of the topology.

After that, each of the nodes 3-1 and 3-2 requests the node 1-1 to transmit packets having packet number subsequent to the packets obtained until then (refer to the step S104 in FIG. 18), and the node 1-1 receives the request and starts transmission of the subsequent data to the nodes 3-1 and 3-2 as new destinations.

Changes in the buffer memory 104 in each of the node 1-1 and the nodes 3-1 and 3-2 during reconfiguration of the topology will be described with reference to FIGS. 20A to 20C.

As described above, the nodes 3-1 and 3-2 at the hierarchical level immediately lower than the node 2-1 cannot receive data from the node 2-1 when the relay function of the node 2-1 stops, so that the data amount in the buffer memory 104 in each of the nodes 3-1 and 3-2 decreases. Meanwhile, the decoders 102 in the nodes 3-1 and 3-2 continue reading data for reproduction process from the buffer memories 104. Therefore, as shown in FIG. 20A, the data in each of the buffer memories 104 continuously decreases.

On the other hand, the node 1-1 at the lever immediately higher than the node 2-1 cannot transfer data to the nodes at the lower hierarchical levels, so that the data amount in the buffer memory 104 in the node 1-1 continuously increases as shown in FIG. 20B.

After reconfiguration of the topology, the nodes 3-1 and 3-2 newly connected at the level lower than the node 1-1 have to recover their buffer memories 104 to the normal state (that is, the state where data is stored to the half) as promptly as possible. If data cannot be continuously received from the upper-order node and the decoders 102 in the nodes 3-1 and 3-2 continue reading data from the buffer memories 104, finally, the buffer memories 104 become empty and the reproducing process in the nodes 3-1 and 3-2 is interrupted.

Consequently, in the second embodiment, the nodes 3-1 and 3-2 trying to achieve early recovery of the storage amount in their buffer memories 104 transmit a control signal (command) for increasing distribution speed to the newly connected node 1-1. The node 1-1 which receives the command distributes data to (the buffer memories 104 in) the nodes 3-1 and 3-2 at a distribution speed which is twice as high as the normal reproducing processing speed in the nodes 3-1 and 3-2, for example, as shown in FIG. 20C. By the operation, the storage amount in the buffer memory 104 recovers to the normal state in almost the same time as that required to reconfigure the topology.

As a mode of increasing the distribution speed, more concretely, the maximum value of the distribution speed is determined by the transfer processing capability of the CPU 100 in each of the nodes related to a so-called bandwidth (frequency band) of the lines L and L'. Considering general redundancy, about twice as high as the normal reproduction processing speed as described above is proper.

As another mode of changing the distribution speed, for example, the distribution speed is not doubled immediately but the node 1-1 may continuously increase the distribution speed at a predetermined rate until a control signal notifying of a fact that the storage amount in the buffer memory 104 in each of the nodes 3-1 and 3-2 has reached a predetermined amount is transmitted from the nodes 3-1 and 3-2. Since the increase in the distribution speed has a limit depending on the output capability of the node 1-1 and the bandwidth of the lines L' connecting the nodes 3-1 and 3-2, whether a packet from a node at a high hierarchical level has reached a node at a low hierarchical node or not is grasped by exchanging necessary messages between the nodes or with another controller. The distribution speed is increased to the allowable highest speed and a packet is transferred at the increased speed. In such a manner, the storage amount in each of the buffer memories 104 can be recovered in the shortest time. The node 3-2 transmits a packet to the lower-order nodes 4-1 and 4-2 at the same speed as that of reception of a packet from the node 1-1.

Next, operations performed when the relay function of the node 2-1 in the network system NT according to the second embodiment stops and the nodes 3-1 and 3-2 at the lower hierarchical level are reconnected to the node 1-1, thereby reconfiguring the topology of the network system NT as shown in FIG. 19 will be described in a lump by using the flowchart of FIG. 21. In the following, the reconnecting operation in the node 3-1 out of the two nodes 3-1 and 3-2 connected to the node 2-1 will be described. The reconnecting operation in the node 3-2 is also similarly executed.

Until the relay function of the node 2-1 stops, the processes shown in FIG. 18 are repeated in the node 3-1. When data from the node 2-1 does not arrive even after lapse of predetermined time in the process of the step S106 shown in FIG. 18, the node 3-1 determines that the relay function in the node 2-1 at the high hierarchical level stops, and starts reconnection of the tree structure.

Concretely, as shown in FIG. 21, in the case where data from the node 2-1 cannot be received within the predetermined time, a timer interrupt instruction is generated in the node 3-1 (refer to the step S105 in FIG. 18), the IP address of the node 1-1 at the hierarchical level immediately higher than the node 2-1, that is, the node 1-1 whose level information seen from the node 3-1 is "2" is obtained from the topology table T in the table memory 103 (step S130), and the information in the topology table T related to the node 2-1 is deleted. After that, the node 3-1 transmits a topology table request message to obtain the topology table T in the node 1-1 to the node 1-1 indicated by the IP address (step S131).

During the topology reconfiguring process, in the node 1-1 at the higher hierarchical level, the same operations (the steps S135 to S142 in FIG. 21) as the operations (the steps S115 to S122 in FIG. 18) performed in the node 2-1 shown in FIG. 4 are executed. The type of a message transmitted from the node 3-1 is determined (steps S136, S137, and S140) and the process (steps S139, S138, S141, and S142) according to the determined type of the message is executed.

In the node 101 in which such processes are executed, when the topology table request message is received from the node 3-1 (step S135) and it is determined that the message is the topology table request message (Y in step S137), the node 1-1 transmits the topology table T stored in the table memory 103 to the node 3-1 (step S138).

The node 3-1 which receives the topology table T (step S132) updates the existing topology table T with the topology table T obtained from the node 1-1 (step S133). More concretely, the node 3-1 recognizes the node 0-1 ad adds the IP address and the node number of the node 0-1.

After that, to recover the storage amount in the buffer memory 104 in the node 3-1 at high speed, the speed parameter is set to "1", acceleration is set to 0.2, and the data request message is transmitted from the node 3-1 to the node 1-1 (step S134). After that, the node 3-1 returns to the step S1105 shown in FIG. 18 and repeats the operations in the steps S105 to S112 as a normal state.

Until an amount of one packet of data corresponding to the data request message is received from the node 1-1, data in the buffer memory 104 is continuously decoded and keeps on decreasing (refer to FIG. 20A). When data starts to be distributed from the node 1-1 (steps S140 and S141), the data is distributed while gradually increasing the distribution speed until data of an amount corresponding to eight packets is stored in the buffer memory 104 (step S109 in FIG. 18). After data of the amount corresponding to eight packets is stored, the buffer memory 104 in the node 3-1 starts functioning in the normal state (refer to FIG. 17B).

As described above, in the process of controlling the connection mode in the network system NT according to the second embodiment, when the relay function in any of nodes stops, another node capable of relaying contents is retrieved. At the time of continuing distribution of contents via the retrieved another node, the distribution speed is made higher than that before stop of the relay function. Thus, the process of contents can be continued in a node belonging to the hierarchical level immediately lower than the node whose relay function stops.

Since distribution is continued while gradually increasing the speed of contents distribution via a newly connected another node to the upper limit speed as the maximum value of the distribution speed, a node belonging to a lower hierarchical level can obtain necessary contents more promptly. It is also possible to detect an amount of unreproduced data stored in the buffer of the node after the relay function stops and the topology is reconfigured and control time in which the distribution speed reaches the highest speed in accordance with the detected unreproduced data amount.

### (B) Modification of Second Embodiment

A modification of the second embodiment will be described with reference to FIG. 22. FIG. 22 shows a flowchart showing the operations of the modification.

In the foregoing second embodiment, when the relay function of the node 2-1 stops, another node (node 1-1) at the higher hierarchical level is retrieved and distribution of contents is newly continued from the node. In the following modification, a plurality of new nodes are retrieved and distribution of contents is continued simultaneously from the plurality of nodes.

In the case where the node 3-1 according to the modification cannot receive data from the node 2-1 within the predetermined time as shown in FIG. 22A, the steps S130 to S133 shown in FIG. 21 are executed to update the topology table T in the node 3-1.

While receiving data distributed from the node 2-1, whether the difference between the storage amount (the number of packets) at that time in the buffer memory 104 and a required storage amount (eight packets) in the buffer memory 104 in the normal state is larger than two packets or not (that is, further data storage is becoming necessary or not) is determined (step S145). When the difference becomes larger than two packets (that is, when further data storage is becoming necessary, Y in step S145), a new data request message is transmitted to the node 1-1, the number of a packet to be received is updated, and a data request message is transmitted to the node 0-1 at the hierarchical level immediately higher than the node 1-1 (step S146). Whether data of one packet each from the nodes 1-1 and 0-1, that is, data of total two packets has been received or not is determined (step S147). When data of two packets has not been received yet (N in step S147), the node 3-1 waits until data of two packets is received. On the other hand, when data of two packets has been received (Y in step S147), the data of two packets is stored in the buffer memory 104, the input counter is updated only by the two packets, the number of a packet to be received is updated (step S148), and the node 3-1 returns to the step S145.

On the other hand, when it is determined in the step S145 that the difference is not larger than two packets (that is, further data storage is unnecessary, N in step S145), whether the difference is larger than one packet or not (that is, whether data does not have to be replenished urgently or not) is determined (step S149). When the difference is not larger than one packet (that is, the storage amount in the buffer memory 104 at present is in the normal state) (N in step S149), the node 3-1 returns to the step S111 in FIG. 4 and continues the normal receiving process.

On the other hand, when the difference is larger than one packet (that is, the storage amount in the buffer memory 104 at present is close to the normal state and it is unnecessary to urgently replenish data) (Y in step S149), the node 3-1 transmits a new data request message to the node 1-1 (step S150) and waits until predetermined time elapses in the counting of the timer 6 in the node 3-1 (step S151). If data from the node 2-1 does not arrive within the predetermined time (N in step S151), the timer interrupt instruction is executed, and the connecting process is performed again on the node 1-1.

On the other hand, when data from the node 1-1 arrives within the predetermined time (Y in step S151), the received data of an amount of one packet is stored in the buffer memory 104, the values of the input counter and the number of packets stored in the buffer memory 104 by an amount of only one packet are updated (step S152), and the node 3-1 returns to the step S145.

When it is determined in the step S147 that data from the node 0-1 cannot be received (Y in step S147), it is also possible to inquire another node (in the case of FIG. 15, the node 1-2 or 1-3) connected to the node 0-1, send a data request message to the another node, and check whether data can be distributed or not.

By the above processes, as shown in FIG. 22B, data is input to the buffer memory 104 in the node 3-1 from a plurality of routes, and the necessary storage amount can be promptly recovered.

In a manner similar to the node 3-1, the node 3-2 receives data from a plurality of routes and recovers to a necessary storage amount. The nodes 4-1 and 4-2 lower than the node 3-2 immediately below the node 2-1 whose relay function stops also receive data from a plurality of routes and recover a necessary storage amount promptly. The nodes 4-1 and 4-2 lower than the node 3-2 immediately below the node 2-1 whose relay function stops may not receive data from a plurality of routes but the node 3-2 may distribute data to the lower-order nodes 4-1 and 4-2 at a speed higher than that in the normal state as in the second embodiment.

In the foregoing modification, by connecting nodes at different hierarchical levels to a node which distributes data, a plurality of paths to the node are formed. Consequently, even in the case where the possibility of occurrence of a failure such as stop of the relay function varies among hierarchical levels, sufficient redundancy can be assured reliably.

### (IV) Third Embodiment

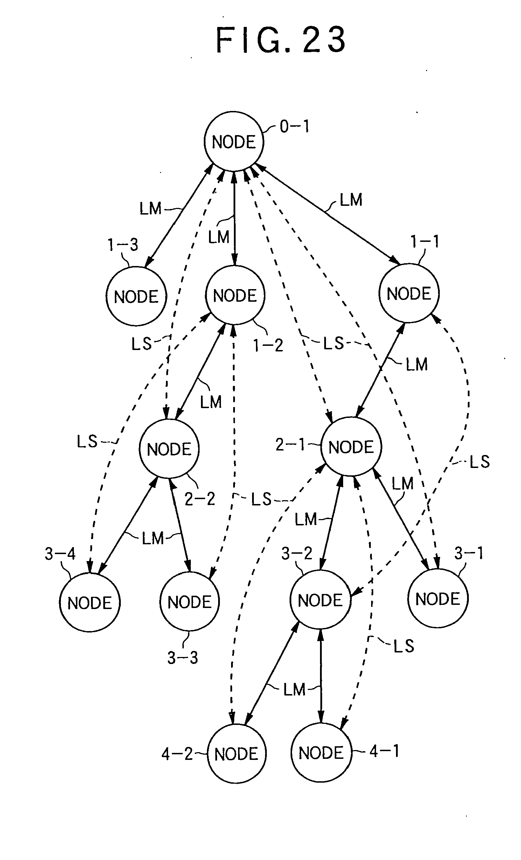

A third embodiment as another embodiment according to the present invention will now be described with reference to FIGS. 23 to 26.

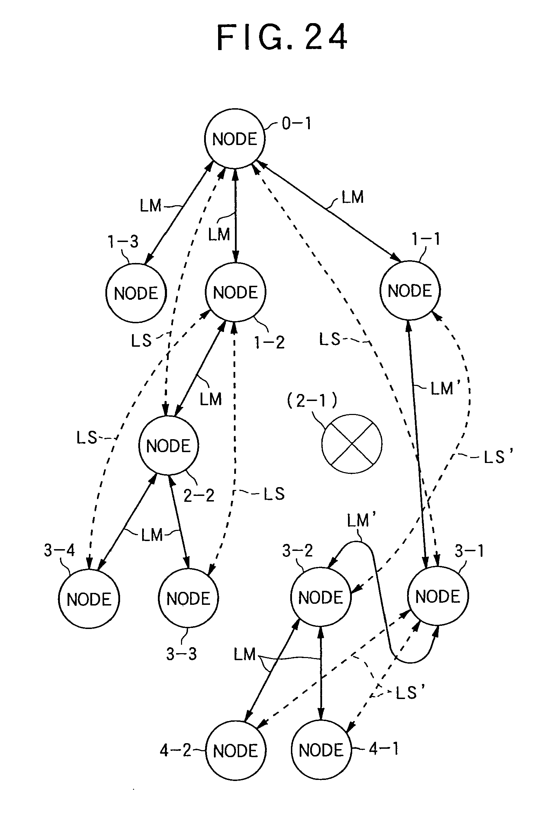

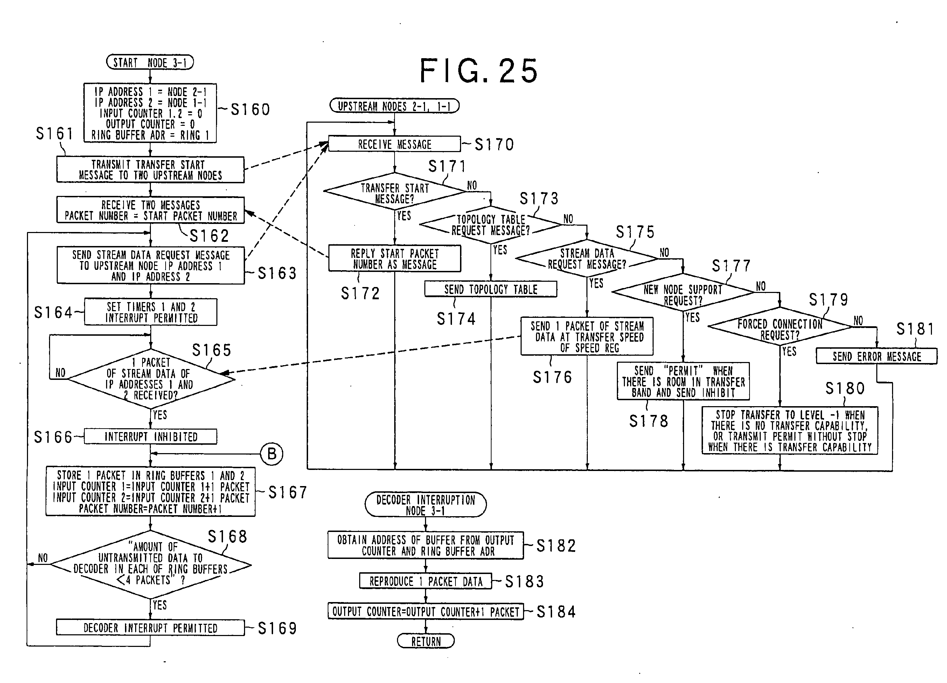

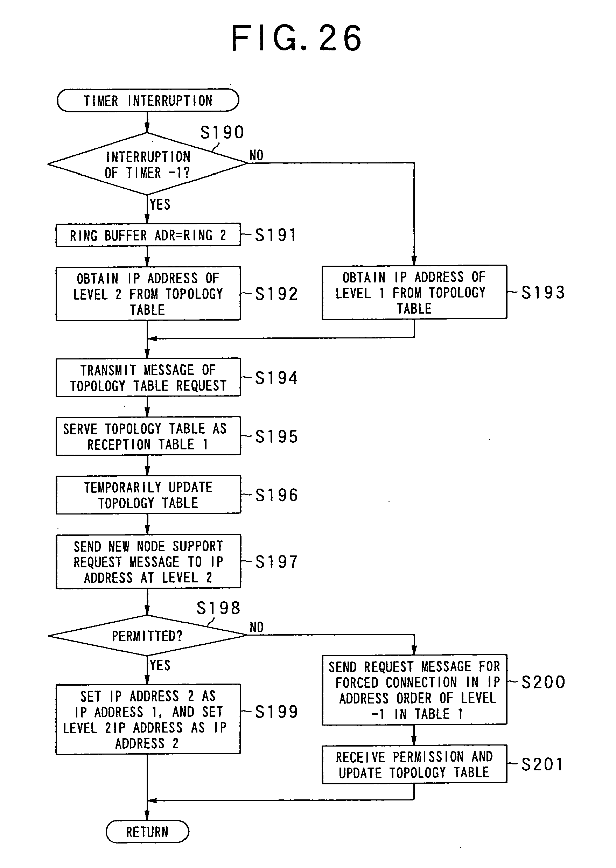

FIGS. 23 and 24 are block diagrams each showing a schematic configuration of a network system according to the third embodiment, and FIGS. 25 and 26 are flowcharts showing operations of the network system.

In the foregoing second embodiment, the case where the relay function in a node stops during reception of contents distributed via only one line L has been described. In the third embodiment described below, one node is preliminarily provided with two paths; a main path and a sub path and receives distributed contents.

As shown in FIG. 23, in a manner similar to the second embodiment, a network system NT2 according to the third embodiment is formed by a tree structure whose apex is the node 0-1 as a distributing apparatus. The network system NT2 includes the nodes 1-1, 1-2, and 1-3 as nodes constructing a first hierarchical level, the nodes 2-1 and 2-2 as nodes constructing a second hierarchical level, the nodes 3-1, 3-2, 3-3, and 3-4 are nodes constructing a third hierarchical level, and the nodes 4-1 and 4-2 as nodes constructing a fourth hierarchical level. The nodes are connected to each other via main lines LM as wire circuits or wireless circuits so as to be able to transmit/receive information to/from each other using the node 0-1 as an apex. A concrete example of each of the nodes is similar to that in the second embodiment.

In addition, in the network system NT2 according to the third embodiment, each of the nodes belonging to the second or lower hierarchical level is connected, by using the sub line LS, to a node immediately upper than the immediately upper-order node to which the main line LM is connected. In the normal distribution state, only contents distributed via the main line LM is provided for the reproducing process in each of the nodes. Contents distributed via the sub line LS is temporarily received and, after that, without being used for the reproducing process, distributed to another node at an immediately lower hierarchical level. It is also sufficient to receive contents distributed from the sub line Ls and distribute contents from the main line to a lower-order node.

The detailed configuration of a node according to the third embodiment is different from that of a node according to the second embodiment (refer to FIG. 2) with respect to the point that two table memories 103, two buffer memories 104, and two timers 106, each one for the main line LM and the other for the sub line LS, are provided. In a manner similar to the second embodiment, one CPU 100, one decoder 102, one broadband interface 105, one speaker 107, and one CRT 8 are provided. Further, in the topology table T stored in each of the table memories in one node, different from the second embodiment, an identifier indicating that the topology table it the topology table T for the main line LM or the topology table T for the sub line LS is added.

For example, when the relay function in the node 2-1 belonging to the network system NT2 in the state shown in FIG. 23 stops, each of the nodes 3-1 and 3-2 at a hierarchical level immediately below the node 2-1 automatically re-connects the main line LM and the sub line LS as a main line LM' and a sub line LS', respectively, as shown in FIG. 24, and continuously receives distributed contents. In this case, in FIG. 23, the node 3-1 is connected to the node 2-1 via the main line LM and is connected to the node 0-1 via the sub line LS. After the relay function in the node 2-1 stops, the node 3-1 connects the main line LM' to the node 1-1, and the connection of the sub line LS to the node 0-1 remains unchanged. On the other hand, in FIG. 23, the node 3-2 is connected to the node 2-1 via the main line LM and is connected to the node 1-1 via the sub line LS. After the relay function in the node 2-1 stops, the node 3-2 connects the main line LM' to the node 3-1 at the same hierarchical level, and the connection of the sub line LS to the node 1-1 remains unchanged. In such a manner, rules are strictly followed such that the main line LM is connected to the closest node, and the sub line LS is connected to a node at a hierarchical level immediately higher than the node to which the main line LM is connected.

For the nodes 4-1 and 4-2 belonging to the fourth hierarchical level, the node to which the sub line LS is connected in FIG. 23 loses the relay function, so that the main line LM remains unchanged and only the sub line LS' is connected to a new node (in the case of FIG. 24, the node to which the sub line LS' is connected is the node 3-1).

Next, topology reconfiguring operation executed in the nodes 3-1, 3-2, 4-1, and 4-2 in the case where the relay function in the node 2-1 actually stops will be described.

When the relay function in the node 2-1 stops as shown in FIG. 24, first, the nodes 3-1 and 3-2 immediately below the node 2-1 start connecting to a node at a hierarchical level higher than the node 2-1 in counting time of the timer 106 described in the second embodiment. During the counting of the timer 106, in a rout connected, the node 3-1 stores data distributed from the node 0-1 in the buffer 4, and the node 3-2 stores data distributed from the node 1-1 into the buffer 4, and distributes the data to the lower-order nodes 4-1 and 4-2. After reconfiguration of the topology, data distributed from the main line LM is stored in the buffer 4, and data distributed from the sub line LS is distributed to a lower-order node.

The node 3-1 or 3-2 having higher speed (in the case of FIG. 24, the node 3-1) is connected to the node 1-1. The node 3-1 connects the new main line LM' to the node 1-1, in addition, maintains the connection to the node 0-1 via the original sub line LS, and receives contents distributed from the node 0-1 (backup distribution).

On the other hand, the node 3-2 which cannot be connected to the node 1-1 is connected via the main line LM' to the node 3-1 belonging to the hierarchical level lower than the node 1-1 at present while maintaining the original sub line LS with the node 1-1. In this case, the node 3-2 can be reconnected directly to the node 0-1. However, a number of nodes are connected to the node 0-1 at present, so that the main line LM' is connected to the node 3-1 in reality.

With respect to the nodes 4-1 and 4-2 at the further lower-order level, the original sub lines LS are disconnected. Consequently, the nodes 4-1 and 4-2 inquire the node 3-2 belonging to the immediately higher order level of a node to which the sub line LS' is to be newly connected. As a result, it can be recognized that a new main line LM' is formed between the nodes 3-2 and 3-1, so that the node 4-1 or 4-2 which has inquired the node 3-2 first forms a new sub line LS' to the node 3-1.

Next, operations executed when a new node is connected to the network system NT2 according to the third embodiment and distribution of contents is started and executed in the normal state including the new node will be described in a lump with reference to FIG. 25. FIG. 25 is a flowchart showing an example of the case where the node 3-1 is newly connected to the node 2-1 in the network system NT2, thereby obtaining the network system NT2 shown in FIG. 23, and distribution of contents is executed to the node 3-1.

In at least a node to which another node is connected at a lower hierarchical level via the main line LM or the sub line LS among the nodes in the network system NT2 according to the third embodiment, processes in the flowchart shown in the upper right are always executed.

Specifically, whenever a message is transmitted from a node at a lower hierarchical level (step S170), the type of the message is determined in order (steps S171, S173, S175, S177, or S179).

When the received message is the start message (Y in step S171), the packet number of data being reproduced at present by the node is sent back as a start packet number (step S117).

When the received message is the topology data table request message (Y in step S173), the topology table T according to the type of the line (the main line or sub line) to which the node sending back the topology data table request message is connected out of topology tables T presently provided for the node is sent back (step S174).

When the received message is the data request message (Y in step S175), data of one packet is transmitted at the reproduction speed designated in the data request message (step S176).

When the received message is a new node support request message that inquires of the possibility of data distribution newly using a sub line LS (Y in step S177), distribution using the sub line LS is possible or not is determined on the basis of the relation with another node which is distributing data at that time. If it is possible, a message of "permit" is replied. On the other hand, if it is impossible, a message of "inhibit" is replied (step S178).

When the received message is a forced connection request message indicative of forced distribution of data using a new sub line LS (Y in step S179), in a manner similar to the case of step S177, whether distribution using the sub line L is possible or not is determined on the basis of the relation with another node that is distributing data at that time. If it is possible, a message of "permit" is replied. On the other hand, if it is impossible, distribution of data is stopped. The distribution is to the node whose level information is "-1" in the topology table T according to the type of the line to which the node that has sent the forced connection request message is connected out of the topology tables presently provided for the node (step S180).

When the received message is not any one of the messages (N in step S179), a preset error message is sent back to the node that has sent the message (step S181).

In each of nodes in which the above-described processes are continuously executed, data from a node whose level information in the topology table T corresponding to the main line LM is "1" is decoded by the decoder 102 and the decoded data is output. On the other hand, data from a node whose level information in the topology table T corresponding to the sub line LS is "1" is distributed to another node at a lower hierarchical level without being decoded.

In the network system NT2 operating in such a state, when the node 3-1 newly enters the network system NT2 by physically being connected to the node 2-1, first, the CPU 100 in the new node 3-1 sets two buffer memories 104 (for the main line LM and the sub line LS) in the node 3-1, sets the IP address of a node indicative of the data supply source, and sets the node 0-1 at the immediately higher hierarchical level on the sub line LS (the IP addresses of the two nodes are obtained by the node 3-1 from the node 2-1 when the node 3-1 is connected to the node 2-1). To calculate an address in which data is stored in each of the buffer memories 104, an input counter 1 (16 bits), an input counter 2 (16 bits), and the output counter (16 bits) are initialized to "0". The input counter 1 counts the number of bytes of received data distributed from the node 2-1 via the main line LS. The input counter 2 counts the number of bytes of received data distributed from the node 0-1 via the sub line LS. The output counter shows an amount of data reproduced by the decoder 102. Further, a buffer address (in FIGS. 25 and 26, properly indicated as "ring buffer ADR") indicative of a "ring buffer 1" is set in the buffer memory 104 corresponding to the main line LM at the time point (step S160).

After completion of the necessary initializing process, the CPU 100 in the node 3-1 refers to the topology tables T in the table memories 3 and transmits a start message requesting the nodes 2-1 and 0-1 to start transfer of contents data (step S161).

Next, the CPUs 100 in the nodes 2-1 and 0-1 which have received the start message (step S170) send, as start packet numbers, the packet numbers of data presently reproduced by the nodes 2-1 and 0-1 to the ode 3-1 (step S172).

The node 3-1 obtains the start packet numbers from the nodes 2-1 and 0-1, stores them into the areas of corresponding packet numbers on the buffer memory 104 corresponding to the lines (step S162), and transmits the data request message requesting data of actual contents to the nodes 2-1 and 0-1 (step S163). The data request message includes information of packet numbers of data to be transmitted from the nodes 3-1 and 2-1 (reproducing process) and the node 0-1 (for distributing data immediately to the lower-order hierarchical level).

The nodes 2-1 and 0-1 that have received the data request message (in step S170, and "Y" in S175) transmit data of an amount of one packet to the node 3-1 at the reproduction speed designated in the data request message (via the main line LM and the sub line LS) (step S176).

In parallel with the operations, the node 3-1 is set to output the data request message, simultaneously, start counting with the timers in the nodes 3-1 and, when the counting becomes "0", generate the timer interrupt instruction independently (step S164). The node 3-1 waits until predetermined time lapses in the counting of each timer 106 (step S165). When data from the nodes 2-1 and 0-1 does not arrive within predetermined time (N in step S165), the node 3-1 executes the timer interrupt instruction, and performs the connecting process again on the nodes 2-1 and 0-1.

On the other hand, when data from the nodes 2-1 and 0-1 arrives within the predetermined time (Y in step S165), the node 3-1 inhibits execution of a timer interrupt instruction (step S166), and stores an amount corresponding to one packet of the received data into the buffer memory 104. Accompanying the process, the values of the input counters 1 and 2 and the numbers of packets stored in the buffer memory 104 are updated only by an amount of one packet (step S167).

The node 3-1 determines whether the amount of data which is stored in each of the buffer memories 104 and has not been output to the decoder 102 becomes four packets (that is, the storage amount of the quarter of the buffer memory 104) or not (step S168). When the amount is less than four packets (Y in step S168), the node 3-1 returns to the step S163 to receive the following packets from the nodes 2-1 and 0-1 and repeats the above-described processes. On the other hand, when the amount of data stored in each of the buffer memories 104 becomes four packets (N in step S168), outputs only data obtained via the main line LM to the decoder 102 (step S169), and returns to the process in the step S163 to receive the following data from the nodes 2-1 and 0-1.

In the process of the step S169, when data of an amount of four packets is stored in the buffer memory 104 corresponding to the main line LM and is output to the decoder 102, the decoder 102 repeats the following operations only by an amount of four packets, thereby performing the data reproducing process. In the operations, the decoder 102 obtains the buffer address indicative of the buffer memory 104 at that time and the address of data output from the buffer memory 104 on the basis of the value of the output counter in the buffer memory 104 indicated by the buffer address (step S182), decodes and reproduces the data only by one packet (step S183), and increments the value of the output counter in the buffer memory 104 only by one packet (step S184).

By executing the data distribution from the node 2-1, the reproducing process in the node 3-1, and distribution using the sub line LS from the node 0-1 as described above, the data reproducing process in the node 3-1 is executed while maintaining the data amount in each of the buffer memories 104 to be constant.

Next, processes performed in the case where the contents relay function in the node 2-1 stops for a reason such that the power switch is turned off in the network system NT2 shown in FIG. 23 will be concretely described with reference to FIGS. 26.

In the network system NT2 according to the third embodiment, when the relay function in the node 2-1 stops for the above-described reason, as shown in FIG. 24, the nodes 3-1 and 3-2 and the nodes 4-1 and 4-2 connected to the original node 2-1 automatically execute topology reconstructing operation, and continue distribution of contents with the topology in the mode shown in FIG. 24.

When the relay function in the node 2-1 stops as shown in FIG. 25, the CPU 100 in each of the nodes 3-1 and 3-2 at the immediately lower hierarchical level (since distribution in the normal state shown in FIG. 25 continues, the processes described with reference to FIG. 25 are repeated) cannot receive data from the node 2-1 even after predetermined time elapses in the process of the step S165 shown in FIG. 25. When data cannot be received even after lapse of the predetermined time (N in step S165), the CPU 100 in each of the nodes 3-1 and 3-2 recognizes that the relay function in the node 2-1 at the immediately higher hierarchical level stops and the topology is disconnected.

After that, on recognition of disconnection of the topology, the interrupt instruction shown in FIG. 26 is executed, with reference to the topology tables T stored in the table memories 103, the topology is reconfigured as shown in FIG. 24.

Specifically, as shown in FIG. 26, when an interrupt instruction is executed, the timer 106 in which predetermined time has elapsed is the timer 106 corresponding to the main line LM (in FIG. 26, indicated as "timer 1") or not is determined (step S190). When it is the timer 106 corresponding to the main line LM (Y in step S190), the value of the buffer address is changed to the value indicative of the buffer memory 104 corresponding to the sub line LS so as to set the buffer memory 104 corresponding to the sub line LS to the buffer memory 104 to output data to the decoder 102 (step S191).
Next, a topology table request message corresponding to the main line LM is transmitted to a ode whose value of level information is "2" (in the case of FIG. 24, the node 1-1) in the main line LM (steps S192 and S194), and a topology table T corresponding to the main line M is obtained from the topology tables T in the node (step S195).

By using the obtained topology table T, the topology tables T in the nodes 3-1 and 3-2 corresponding to the main line LM are updated (step S196).

Next, the new node support request message inquiring the node of whether the sub line LS can be connected to the node (the node 0-1 in the case of FIG. 24) whose level information is "2" in the updated topology table T or not (step S197).

Whether a reply to the new node support request message is "permit" or not is checked (step S198). If it is "permit" (Y in step S198), the IP address of the node to which the sub line LS was connected before the relay function stops is rewritten that the main line LM is connected at present, and the IP address of a node (in the case of FIG. 24, the node 0-1) to which the sub line LS is newly connected is written as the IP address of a node whose level information is "2" in the topology table T corresponding to the present (new) sub line LS into the topology table T (step S199).

On the other hand, when it is determined in the step S198 that the reply to the new node support request message is "inhibit" (N in step S198), the forced connection request message is transmitted to the node 1-1 at the hierarchical level immediately lower than the node 0-1 to which the sub line LS is originally connected (step S200).

When the node 1-1 receives the forced connection message and the sub line LS can be connected in the node 1-1, the connection is permitted in the node 1-1 and the topology table T in the node 3-1 is updated (step S201). When it is impossible, distribution of data from the node 0-1 to the node 1-1 is stopped. The node 1-1 to which data transfer is stopped executes the above-described process, thereby reconfiguring the topology.

On the other hand, when it is determined in the step S190 that the interrupt instruction is executed in the timer 106 corresponding to the sub line LS (N in step S190), the relay function of the node 2-1 at the immediately higher hierarchical level operates on the main line LM. Consequently, the topology table request message corresponding to the main line LM is transmitted to the node 2-1 (steps S193 and S194), a topology table T in the node 2-1 is obtained (step S195), and the processes in step S196 and subsequent steps are executed.

As described above, in the network system NT2 of the third embodiment, the main lines LM and the sub lines LS are formed so as to connect a plurality of nodes to one node, data distributed via the main lines LM is used for reproducing process in the one node and the like and distribution to other nodes belonging to a lower hierarchical level. On the other hand, data distributed via the sub lines LS is used for distribution to the other nodes belonging to lower-order hierarchical levels. By connecting multiple lines to each of nodes, redundancy can be increased in preparation of stop in the relay function in any of nodes, and the reproducing process and the like in nodes belonging to the lower hierarchical levels can be prevented from being stopped.

When the relay function in a node belonging to a higher hierarchical level stops on the main line LM to one node, data distributed via the sub line LS is switched so as to be provided for the reproducing process or the like, so that the reproducing process or the like in the one node is not interrupted.

Further, when data distributed via the sub line LS is switched so as to be provided for the reproducing process or the like, any node belonging to a higher hierarchical level is retrieved and a new sub line LS is formed by connecting the retrieved node. Consequently, even when the sub line LS is used as the main line LM, a new sub line LS is formed, and redundancy can be assured and maintained.

Further, when the relay function in a node belonging to a higher hierarchical level stops on the sub line LS to one node, any node belonging to a higher hierarchical level is retrieved and a new sub line LS is formed by connecting the retrieved node. Consequently, even when the relay function in a node on the sub line LS stops, a new sub line LS is formed, and redundancy can be assured and maintained.

Since a node at a higher hierarchical level is retrieved so that another node at a hierarchical level to which one node belongs is included in the new main line LM, supply of distributed information can be received via a node at the same hierarchical level.

In each of the foregoing embodiments, as a method of detecting stop of the relay function in any of the nodes, other than the above-described method, a node may periodically detect whether there is a response to a node at a higher or lower hierarchical level. For example, when the relay function of the node 2-1 itself in each of the embodiments stops, the stop may be notified to the node 101 at the higher hierarchical level or the nodes 3-1 and 3-2 at the lower hierarchical level.

The above-described series of connection mode control processes can be also performed under control of another server apparatus on the outside on the network system NT or NT2. In this case, the server apparatus has information of the connection modes of the nodes in the network system NT or NT2. By sending an inquiry from the nodes 3-1 and 3-2 to the server apparatus, the node 1-1 at the hierarchical level immediately higher than the node 2-1 whose relay function stops is recognized.

Further, the decoder 102, the CRT 108, and the like for reproducing contents may be also constructed so as to connect a reproducing device or the like in a place other than a node via another network.

Further, it is also possible to record a program corresponding to the flowcharts of FIGS. 18, 21, 22, 25, and 26 on an information recording medium such as a flexible disk or a hard disk or obtain the program via the Internet or the like and record it, and read and execute the program by a general computer, thereby making the computer function as the CPU 100 according to the embodiments.

### Industrial Applicability

As described above, the application can be used for the field of distributing contents by using a network system having a tree structure. In particular, when the invention is applied to the field of distributing contents such as real-time broadcasting of a movie, music, or the like in which interruption of distribution is inconvenient, conspicuous effects are obtained.

## Claims

1. A network controlling apparatus for controlling any of a plurality of relays included in a network system including a distributor as a distribution source of distribution information and a plurality of relays connected to the distributor while forming a plurality of hierarchical levels, and in which the distribution information is distributed from the distributor to the relays, the apparatus comprising:
a detecting means for detecting whether function of relaying the distribution information in any of the relays on the upstream in distribution of the distribution information of a target relay as the relay to be controlled stops or not; and
a consumption amount control means for controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

2. The network controlling apparatus according to claim 1, wherein the distribution information is image information, and
the consumption amount control means decreases the unit time consumption amount by making a speed of reducing a storage amount of the image information in buffer means for temporarily storing the image information in the target relay by using the image information for the process slower than the reducing speed before the relay function stops.

3. The network controlling apparatus according to claim 2, wherein the image information is moving picture information made by a plurality of still pictures, and
the consumption amount control means decreases the speed of reducing the storage amount by repeatedly outputting the same still picture a plurality of times from the buffer means.

4. The network controlling apparatus according to claim 1, wherein the distribution information is coded image information, and
the consumption amount control means reduces the unit time consumption amount by making a speed of decoding the image information in the process in the target relay slower than the decoding speed before the relay function stops.

5. The network controlling apparatus according to claim 1, wherein the distribution information is moving picture information made by a plurality of still pictures, and
the consumption amount control means reduces the unit time consumption amount by making display time of the still picture longer than the display time before stop of the relay function.

6. The network controlling apparatus according to any one of claims 1 to 5, wherein the distribution information is made by a plurality of continuous pieces of unit distribution information,
the unit distribution information in a preset position in the distribution information is empty unit distribution information whose information amount provided for the process is zero, and
the apparatus further comprises:
a reset means, after the distribution to the target relay restarts, for resetting the unit time consumption amount in the target relay to the unit time consumption amount which is the same as that before the relay function stops; and
a distribution control means, after the unit time consumption amount in the target relay is reset, for distributing the empty unit distribution information only to all of the relays except for the relay on the downstream in the distribution before stop of the relay function of the relay whose relay function stops.

7. A control method of controlling any of relays included in a network system including a distributor as a distribution source of distribution information and a plurality of relays connected to the distributor while forming a plurality of hierarchical levels and in which the distribution information is distributed from the distributor to the relays, the method comprising:
a detecting step of detecting whether function of relaying the distribution information in any of the relays on the upstream in distribution of the distribution information to a target relay as the relay to be controlled stops or not; and
a consumption amount control step of controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

8. A network controlling program for making a computer included in a network control apparatus for controlling any of a plurality of relays included in a network system including a distributor as a distribution source of distribution information and a plurality of relays connected to the distributor while forming a plurality of hierarchical levels, and in which the distribution information is distributed from the distributor to the relays, function as:
a detecting means for detecting whether function of relaying the distribution information in any of the relays on the upstream in distribution of the distribution information of a target relay as the relay to be controlled stops or not; and
a consumption amount control means for controlling a unit time consumption amount as a consumption amount per unit time of the distribution information stored in the target relay, the distribution information being consumed for use in a process executed in the target relay when stop of the relay function is detected, to be smaller than the unit time consumption amount before the relay function stops.

9. A connection mode controlling apparatus for controlling a connection mode among a distributor as a distribution source of distribution information and a plurality of relays connected to the distributor in a tree structure while forming a plurality of hierarchical levels in a network system in which the distribution information is distributed, the apparatus comprising:
a retrieval means, when relay function in any of the relays stops, for retrieving any of the relays other than the relay whose relay function stops and capable of relaying the distribution information;
a connecting means for connecting the relay to receive the distribution information to the retrieved another relay; and
a distribution continuing means for continuing the distribution of the distribution information via the connected another relay by making distribution speed of the distribution information via the another relay faster than distribution speed before the relay function stops.

10. The connection mode controlling apparatus according to claim 8, wherein the distribution continuing means continues the distribution while gradually increasing distribution speed of the distribution information via the connected another relay to, as an upper limit, the maximum value of the distribution speed specified in the network connecting the distributor and the relays.

11. The connection mode controlling apparatus according to claim 9 or 10, wherein the distribution continuing means continues the distribution by making distribution speed faster than distribution speed before the relay function stops until a storage amount in the relay as the distribution destination, of distributed distribution information becomes a predetermined amount.

12. A connection mode controlling apparatus for controlling a connection mode among a distributor as a distribution source of distribution information and a plurality of relays connected to the distributor in a tree structure while forming a plurality of hierarchical levels in a network system in which the distribution information is distributed, the apparatus comprising:
a connecting means for connecting some of the plurality of relays to one of the relays, thereby forming a plurality of paths in which the distribution information is distributed to the one relay; and
a distribution control means for distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.

13. The connection mode controlling apparatus according to claim 12, further comprising switching means, when the relay function of the relay belonging to a hierarchical level upper than the one relay on the main path stops, for switching the distribution information distributed to the one relay via the sub path so as to be provided for the external output process in the one relay.

14. The connection mode controlling apparatus according to claim 13, further comprising a retrieval means, when the distribution information distributed to the one relay via the sub path is switched by the switching means so as to be provided for the external output process in the one relay, for retrieving the distributor or a new relay belonging to the hierarchical level higher than the one relay,
wherein the connecting means connects the distributor or the new relay retrieved by the retrieval means to the one relay, thereby forming a new path.

15. The connection mode controlling apparatus according to claim 12, further comprising a retrieval means, when the relay function in the relay belonging to the hierarchical level higher than the one relay on the sub path stops, for retrieving either the distributor or the new relay belonging to the hierarchical level higher than the one relay,
wherein the connecting means connects the distributor or the new relay retrieved by the retrieval means to the one relay, thereby forming a new sub path.

16. The connection mode controlling apparatus according to claim 14 or 15, wherein the retrieval means retrieves the distributor or the new relay so that another relay at the hierarchical level to which the one relay belongs is included in the new main path.

17. The connection mode controlling apparatus according to any one of claims 9 to 16, wherein the connecting means connects each of the relays at different hierarchical levels to the one relay, thereby forming a plurality of paths.

18. A connection mode controlling method of controlling a connection mode among a distributor as a distribution source of distribution information and a plurality of relays connected to the distributor in a tree structure while forming a plurality of hierarchical levels in a network system in which the distribution information is distributed, the method comprising:
a retrieval step, when relay function in any of the relays stops, of retrieving any of the relays other than the relay whose relay function stops and capable of relaying the distribution information;
a connecting step of connecting the relay to receive the distribution information to the retrieved another relay; and
a distribution continuing step, as a distribution connecting step of continuing distribution of the distribution information via the connected another relay, of continuing the distribution by making distribution speed of the distribution information via the another relay faster than distribution speed before the relay function stops.

19. A connection mode controlling method of controlling a connection mode among a distributor as a distribution source of distribution information and a plurality of relays connected to the distributor in a tree structure while forming a plurality of hierarchical levels in a network system in which the distribution information is distributed, the method comprising:
a connecting step of connecting some of the plurality of relays to one of the relays, thereby forming a plurality of paths in which the distribution information is distributed to the one relay; and
a distribution control step of distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.

20. A connection mode controlling program for making a computer included in a control mode controlling apparatus for controlling a connection mode among a distributor as a distribution source of distribution information and a plurality of relays connected to the distributor in a tree structure while forming a plurality of hierarchical levels in a network system in which the distribution information is distributed, function as:
a retrieval means, when relay function in any of the relays stops, for retrieving any of the relays other than the relay whose relay function stops and capable of relaying the distribution information;
a connecting means for connecting the relay to receive the distribution information to the retrieved another relay; and
a distribution continuing means, as a distribution continuing means for continuing distribution of the distribution information via the connected another relay, of continuing the distribution by making distribution speed of the distribution information via the another relay faster than distribution speed before the relay function stops.

21. A connection mode controlling program of making a computer included in a connection mode controlling apparatus for controlling a connection mode among a distributor as a distribution source of distribution information and a plurality of relays connected to the distributor in a tree structure while forming a plurality of hierarchical levels in a network system in which the distribution information is distributed, function as:
a connecting means for connecting some of the plurality of relays to one of the relays, thereby forming a plurality of paths in which the distribution information is distributed to the one relay; and
a distribution control means for distributing the distribution information distributed to the one relay via a main path as one of the paths to another relay belonging to a hierarchical level lower than the one relay, providing the distribution information for an external output process in the one relay, and distributing the distribution information distributed to the one relay via the main path as one of the paths or a sub path as another one of the paths to further another relay belonging to a hierarchical level lower than the one relay.
